(19) **Europäisches Patentamt European Patent Office Office européen des brevets**

(11) **EP 4 339 907 B1**

(12) **EUROPEAN PATENT SPECIFICATION**

(45) Date of publication and mention
of the grant of the patent:
**11.02.2026 Bulletin 2026/07**

(21) Application number: **22195730.1**

(22) Date of filing: **14.09.2022**

(51) International Patent Classification (IPC):
**G06V 20/70** *(2022.01)*        **G06V 20/56** *(2022.01)*
**G06V 10/82** *(2022.01)*        **G06V 10/44** *(2022.01)*

(52) Cooperative Patent Classification (CPC):
**G06V 20/56; G06V 10/44; G06V 10/82; G06V 20/70**

(54) **SURFACE IDENTIFICATION METHOD, TRAINING METHOD, COMPUTER PROGRAM, COMPUTER READABLE MEDIUM, SURFACE IDENTIFICATION SYSTEM AND CONTROL SYSTEM**

OBERFLÄCHENIDENTIFIZIERUNGSVERFAHREN, TRAININGSVERFAHREN, COMPUTERPROGRAMM, COMPUTERLESBARES MEDIUM, OBERFLÄCHENIDENTIFIZIERUNGSSYSTEM UND STEUERUNGSSYSTEM

PROCÉDÉ D'IDENTIFICATION DE SURFACE, PROCÉDÉ D'APPRENTISSAGE, PROGRAMME INFORMATIQUE, SUPPORT LISIBLE PAR ORDINATEUR, SYSTÈME D'IDENTIFICATION DE SURFACE ET SYSTÈME DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.03.2024 Bulletin 2024/12**

(73) Proprietors:
• **TOYOTA JIDOSHA KABUSHIKI KAISHA**
**Aichi-Ken 471-8571 (JP)**
• **Czech Technical University in Prague**
**16627 Praha 6 (CZ)**

(72) Inventors:
• **CHUMERIN, Nikolay**
**1140 BRUSSELS (BE)**
• **VOJIR, Tomas**
**16627 PRAGUE 6 (CZ)**
• **MATAS, Jiri**
**16627 PRAGUE 6 (CZ)**

(74) Representative: **Cabinet Beau de Loménie**
**103, rue de Grenelle**
**75340 Paris Cedex 07 (FR)**

(56) References cited:
• **VOJIR TOMAS ET AL: "Road Anomaly Detection by Partial Image Reconstruction with Segmentation Coupling", 2021 IEEE/CVF INTERNATIONAL CONFERENCE ON COMPUTER VISION (ICCV), IEEE, 10 October 2021 (2021-10-10), pages 15631 - 15640, XP034092217, DOI: 10.1109/ICCV48922.2021.01536**
• **GIANCARLO DI BIASE ET AL: "Pixel-wise Anomaly Detection in Complex Driving Scenes", ARXIV.ORG, CORNELL UNIVERSITY LIBRARY, 201 OLIN LIBRARY CORNELL UNIVERSITY ITHACA, NY 14853, 9 March 2021 (2021-03-09), XP081908513**

EP 4 339 907 B1

**Description**

BACKGROUND OF THE INVENTION

The present disclosure is related to methods and systems for identifying, in an image which shows a scene, and in which a certain type of surface is shown, for instance a road surface, which pixels of the image represent said surface, and to distinguish these pixels (hereinafter, 'surface pixels') from the other pixels of the image, the 'non-surface pixels'. For these methods and systems, a main challenge is to reliably identify, in the image, the objects of any type, also called anomalies, which may be present on the surface but actually are not part of the surface, and consequently must not be identified as forming part of the surface.

A main application of these methods and systems is, in the field of autonomous driving, to identify the surface of the road, on which the vehicle can drive (the driveable surface). The proposed methods and systems however can be used for many other applications. The considered surface can be for instance the surface of the sea, etc., and more generally, any surface on or above which a vehicle, a machine or a robot is located. These systems and methods can be used for mobile applications (e.g. in autonomous vehicle, or for stationary applications (e.g. surveillance of a crossroad, of a conveyor belt in a factory, etc.).

Numerous methods have been developed in order to detect the driveable surface on which road vehicles can drive, based on camera images acquired by front cameras of the vehicles. Some methods have also been developed in particular to detect anomalies on surfaces, such as the method proposed by Ref.[1] cited below.

However, consistently and reliably detecting the road surface, and in particular correctly detecting the objects - or any kind of unknown elements - present on the surface is a challenging task.

Consequently, there remains a need for systems and methods which are capable of analysing images so as to reliably identify, in these images, the pixels of these images which actually represent said surface, in particular without including any anomalies possibly present on the surface.

The following references disclose various technologies related to image analysis or segmentation, in particular in the field of anomaly detection:

[1] Tomas Vojir, Tomas Sipka, Rahaf Aljundi, Nikolay Chumerin, Daniel Olmeda Reino, and Jiri Matas. Road Anomaly Detection by Partial Image Reconstruction With Segmentation Coupling. In Int. Conf. Comput. Vis., October 2021.
[2] L. Chen, G. Papandreou, I. Kokkinos, K. Murphy, and A. L.Yuille. DeepLab: Semantic Image Segmentation with Deep Convolutional Nets, Atrous Convolution, and Fully Connected CRFs. IEEE Trans. Pattern Anal. Mach. Intell., 40(4):834-848, 2018.
[3] M. Cordts, M. Omran, S. Ramos, T. Rehfeld, M. Enzweiler, R. Benenson, U. Franke, S. Roth, and B. Schiele. The Cityscapes Dataset for Semantic Urban Scene Understanding. In IEEE Conf. Comput. Vis. Pattern Recog., 2016.
[4] Z. Wang, E. P. Simoncelli, and A. C. Bovik. Multiscale structural similarity for image quality assessment. In The Thirty-Seventh Asilomar Conference on Signals, Systems Computers, 2003, volume 2, Vol.2, 2003.
[5] Florian Schroff, Dmitry Kalenichenko, and James Philbin. FaceNet: A Unified Embedding for Face Recognition and Clustering. In IEEE Conf. Comput. Vis. Pattern Recog., June 2015.
[6] Karen Simonyan and Andrew Zisserman. Very Deep Convolutional Networks for Large-Scale Image Recognition. In International Conference on Learning Representations, 2015.
[7] Jiahui Yu, Zhe Lin, Jimei Yang, Xiaohui Shen, Xin Lu, and Thomas S. Huang. Free-Form Image Inpainting With Gated Convolution. In Int. Conf. Comput. Vis., October 2019.
[8] Justin Johnson, Alexandre Alahi, and Li Fei-Fei. Perceptual Losses for Real-Time Style Transfer and Super-Resolution. In Eur. Conf. Comput. Vis., pages 694-711, Cham, 2016.
[9] Alexey Dosovitskiy and Thomas Brox. Generating Images with Perceptual Similarity Metrics Based on Deep Networks. In Adv. Neural Inform. Process. Syst., page 658-666, 2016.
[10] Elad Levi, Tete Xiao, Xiaolong Wang, and Trevor Darrell. Rethinking Preventing Class-Collapsing in Metric Learning With Margin-Based Losses. In Int. Conf. Comput. Vis., pages 10316-10325, October 2021.
[11] P. Pinggera, S. Ramos, S. Gehrig, U. Franke, C. Rother, and R. Mester. Lost and Found: detecting small road hazards for self-driving vehicles. In International Conference on Intelligent Robots and Systems (IROS), 2016.
[12] Krzysztof Lis, Krishna Nakka, Pascal Fua, and Mathieu Salzmann. Detecting the Unexpected via Image Resynthesis. In Int. Conf. Comput. Vis., October 2019.
[13] Robin Chan, Krzysztof Lis, Svenja Uhlemeyer, Hermann Blum, Sina Honari, Roland Siegwart, Pascal Fua, Mathieu Salzmann, and Matthias Rottmann. SegmentMeIfYouCan: A Benchmark for Anomaly Segmentation, 2021.
[14] Krzysztof Lis, Sina Honari, Pascal Fua, and Mathieu Salzmann. Detecting Road Obstacles by Erasing Them, 2021.
[15] Hermann Blum, Paul-Edouard Sarlin, Juan Nieto, Roland Siegwart, and Cesar Cadena. Fishyscapes: A Benchmark for Safe Semantic Segmentation in Autonomous Driving. In 2019 IEEE/CVF International Conference on Computer Vision Workshop (ICCVW), pages 2403-2412, 2019.

[16]Fisher Yu, Haofeng Chen, Xin Wang, Wenqi Xian, Yingying Chen, Fangchen Liu, Vashisht Madhavan, and Trevor Darrell. BDD100K: A Diverse Driving Dataset for Heterogeneous Multitask Learning. In IEEE Conf. Comput. Vis. Pattern Recog., June 2020.

[17] VOJIR, Tomas, ŠIPKA, Tomáš, ALJUNDI, Rahaf, et al. Road anomaly detection by partial image reconstruction with segmentation coupling. In : Proceedings of the IEEE/CVF International Conference on Computer Vision. 2021. p. 15651-15660.

SUMMARY OF THE INVENTION

In view of the above-mentioned problem, the objective of the present disclosure is to propose methods and systems which are capable of analysing images so as to reliably identify, in these images, the pixels of these images which actually represent a certain surface shown by the image, in particular without including anomalies possibly present on that surface.

In order to meet the above purpose, the computer-implemented surface identification method as defined in claim 1 is proposed.

In claim 1, a surface embedding vector is an embedding vector of the segmentation embedding which is mainly associated with surface pixels (is located at a location in the segmentation embedding which corresponds to locations mainly of surface pixels of the initial scene image,), and conversely a non- surface embedding vector is an embedding vector of the segmentation embedding which is associated with mainly non-surface pixels in the initial scene image.

In claim 1, 'essentially all non-surface embedding vectors' means a proportion considered acceptable for the specific task to be performed, for example at least 90%.

More information about the basis of the above-defined method can be found in Ref.[1].

However, by contrast with known methods, in the above-defined method the presence of the embedding module, specifically configured to embed surface pixels and non-surface pixels of the scene image respectively as surface embedding vectors and non-surface embedding vectors so that, in the embedding space, the non- surface embedding vectors be separated from the cluster of surface embedding vectors, substantially improves the performance of the surface identification method.

The embedding module may be configured to achieve the above-defined result preferably by training.

In this case for instance, during training, the loss function may comprise loss terms calculated based on the output of the embedding network. For such terms, triplet loss terms or contrastive loss terms can be used.

In some embodiments, the neural network-based embedding module is configured so that over segmentation embeddings outputted for a set of scene images, essentially all non-surface embedding vectors of segmentation embeddings outputted based on the set of scene images are separated from a combined cluster including all the surface embedding vectors of surface embeddings outputted based on that set of scene images.

In some embodiments, at step S42, the calculation of the reconstructed scene image using a neural network-based reconstruction module (RM) is further based on the segmentation latent features map.

In some embodiments, the neural network-based embedding module comprises an upstream block configured to apply a spatial pooling function, in particular a spatial pyramid pooling function, to the segmentation latent features map. Spatial pooling means calculating an output datum in which for each location (i,j) of the input datum, information from a vicinity (in the W,H directions) of the location is aggregated or pooled.

As an alternative, the upstream block may for instance be configured to simply perform a linear transformation.

The upstream block may be configured for instance to execute the spatial pooling function by performing atrous (or dilated) convolution(s).

In some embodiments, the neural network-based embedding module comprises a multi-layer perceptron, configured to calculate the segmentation embedding, in particular based on the output of the upstream block.

In some embodiments, additional information is inputted to the coupling module in order to increase the performance thereof.

The surface identification method as claimed in claim 1 comprises the steps of: S62) calculating an InPainted Image by inpainting an error mask obtained by at least thresholding the reconstruction error map; and calculating a difference map representative of differences between the scene image and the InPainted Image; and wherein at step S70, the calculation of surface pixels map using a neural network-based is further based on the difference map that is input to such neural network.

In the sentence above, 'inpainting a mask' is the operation of calculating an image which is a modified version of the mask in which the white areas of the mask (the areas where the pixels have the value '1') have been filled or 'in-painted' in a realistic manner.

The difference map is preferably calculated as a perceptual loss.

In some variants of these embodiments, the difference map is calculated in two steps. Indeed in these variants, calculating the difference map comprises the steps of: S64) passing respectively the InPainted Image and the scene image through a feature extraction network configured to input the InPainted Image and the scene image and to output two perceptual representations obtained using perceptual loss based respectively on the scene image and the InPainted Image; and S66) calculating the difference map based on said perceptual representations.

In the first step, normally the InPainted Image is passed through the feature extraction network, to obtain a first perceptual representation; besides, the scene image is also passed through the feature extraction network, which outputs the second perceptual representation.

As mentioned above, at step S62 the inpainted image is calculated by inpainting an error mask. This error mask is obtained by at least performing a thresholding operation on the reconstruction error map. However, other operations can be performed to obtain the error mask. For instance, an image dilation can be applied to the map obtained by the thresholding operation.

The feature extraction network is a neural network trained to identify features in images, for instance a VGG network.

Other possibilities to provide additional information to the coupling module are explained below.

In some embodiments, the surface identification method further comprises the steps of:

S52 - S54) based on a datum derived from the scene image or representative of the scene shown in the scene image, calculating a mean embedding vector as a mean of embedding vectors of the segmentation embedding at locations identified in said datum as corresponding or probably corresponding to surface pixels; and

S56) calculating a feature channel as a channel in which each pixel has a value based on a distance between said mean embedding vector and the corresponding embedding vector of the segmentation embedding; and at step S70, the calculation of surface pixels map using a neural network is further based on the feature channel that is input to such neural network.

In these embodiments, different types of data can be used as a datum. The data representative of the scene appearing in the scene image can be data acquired from other sensor(s), such as lidars, radars, infrared cameras, etc. The data derived from the scene image can be the segmentations, the reconstruction errors, etc.

In some of these latter embodiments, the datum is the segmentation and the mean embedding vector is calculated as a mean of embedding vectors of the segmentation embedding at locations identified in segmentation as corresponding to surface pixels.

In some of these embodiments, the datum is the reconstruction error map and the mean embedding vector is calculated as a mean of embedding vectors of the segmentation embedding at locations where the reconstruction error is below a predetermined threshold.

Indeed these locations correspond to pixels identified as probably corresponding to surface pixels.

Preferably, the methods and systems according to the present disclosure are implemented using modules (the segmentation module, the embedding module, the reconstruction module, the coupling module, the distance-based scoring module and the InPainting module), among which at least one module is trained by machine-learning. Part or all of these networks can for instance be based on neural networks.

In this case, the trainable modules are trained so that the coupling module predicts a surface pixels map as its output which correctly separates the surface pixels from the non-surface pixels.

The present disclosure further includes a computer-implemented training method for training a surface identification system to perform one of the above described surface identification methods.

In the training method, during training, the embedding module may be trained by end-to-end training of the EM and/or by a separate training.

The training method may comprise training the neural network-based embedding module using a loss function and a training dataset, the training dataset comprising scene images; the loss function being configured, based on triplets of embedding vectors, each triplet comprising an anchor embedding vector, a surface embedding vector and a non-surface embedding vector, the anchor embedding vector being a surface embedding vector, to enforce a margin distance between the anchor embedding vector and non-surface embedding vectors, while minimizing distance to the surface embedding vector.

The loss function can for instance include max-margin triplet loss terms.

In some embodiments of the training method, the end-to-end training step is performed using a loss function L comprising a reconstruction loss term LR calculated based on the reconstruction error map. In those embodiments, the reconstruction loss term may be defined so as during training, to minimize the reconstruction errors for surface pixels and to maximize the reconstruction errors for non-surface pixels.

It has appeared indeed that by training the surface identification system using a loss function comprising the above-mentioned reconstruction loss term LR makes it possible to efficiently detect non-surface pixels, since they form poorly reconstructed regions in the reconstructed scene image.

In the above-defined method, the reconstructed scene image is a reconstructed version of the scene image, which in most cases resembles the scene image.

As mentioned above, the segmentation is a datum, usually a map, in which the pixels of the scene image are classified into predetermined categories. These categories themselves are classified in two groups: the surface categories, and the non-surface categories. The 'surface categories' are categories for semantic elements of the scene image which belong to the surface. The 'non-surface categories' are categories for semantic elements of the scene image which do not belong to the surface.

For instance, if the scene image is a scene representing an urban environment and the surface which has to be identified is the surface of the road, the surface categories could be 'asphalt surfaces', 'concrete surface' (with the road surface being made either of asphalt or concrete), and the non-surface categories could be 'ego-vehicle' comprising the pixels which represent a vehicle on which the surface identification system is mounted, 'environment' representing all objects surrounding the vehicle except the road surface, and 'sky', representing the sky.

Consequently, based on the segmentation, the scene image pixels are classified (or can be classified) as belonging to a surface category or a non-surface category.

Preferably, the segmentation predicted at step S30 is predicted (that is, calculated) without applying a normalization function. Indeed, normalizing the segmentation causes a loss of information and consequently may decrease the performance of the surface identification method.

For instance, if the segmentation is calculated using a deep neural network, the segmentation can be the logits of the neural network, that is, the raw output of the last (or last but one) layer of the neural network, before applying a normalization operation (such as Softmax or Argmax).

In the present disclosure, the following notations or conventions are used:

Processing modules or units are noted with uppercase letters ('SM'), while data are noted with lowercase letters ('spm').

The word 'term', even in the singular form, may refer to a sum of a plurality of terms.

A map is a three-dimensional datum $V(i,j,k)$ composed of vectors $(v(i,j))$ placed at locations $(i,j)$ arranged along two dimensions generally called the height and the width.

An image is a map whose vectors have between 1 (monochrome image) and 3 components (for instance in RGB images). If the vectors have only one component, the image may be called a channel.

When a noun is written followed by '(s)', it means that the object or item indicated by the noun can be in the singular or plural form. Accordingly, the expression 'object(s)' means 'at least one object'. Furthermore, a sentence like 'Object(s) are present' includes the singular form, that is, it encompasses the case where a single object is present. 'Property(ies)' means 'property or properties'.

The term "comprising a" should be understood as being synonymous with "comprising at least one" unless otherwise stated.

When a function is calculated "based on a datum", the function may also be calculated based on one or more additional data. Consequently, 'based on' can be understood as 'based at least on'.

Different functions can be used to calculate the reconstruction error map at step S44.

For instance, in some embodiments, at the reconstruction error map calculation step S44, the reconstruction error for a pixel is calculated by comparing pixel values for a first sub-image of the reconstructed scene image centered on the considered pixel and pixel values for a corresponding, second sub-image of the scene image also centered on the considered pixel. By calculating the reconstruction error in this way, the performance of the method can be improved.

The original meaning of an 'atrous convolution' is explained in Ref.[2].

An atrous convolution applied to an image is a convolution based on a kernel defined in the image by a predetermined height and a predetermined width relative to the image, and the atrous convolution is calculated based only on a strict subset of the pixels of the kernel (that is, not all pixels of the kernel are used to calculate the atrous convolution).

In particular, in some atrous convolutions, the pixels of the convolution kernel may be spaced by a dilation factor (this factor being greater than or equal to 1). In other words, in the height and/or width direction of the image, the pixels used to calculate the atrous convolution may be separated from each other by non-utilized pixels, which are not used to calculate the atrous convolution.

In particular implementations, the proposed methods are determined by computer program instructions.

Accordingly, another purpose the present disclosure is to propose one or more computer program(s) comprising instructions which, when the instructions are executed by a computer, cause the computer to carry out the steps of one of the above-defined surface identification methods, or the steps of one of the above-defined training methods.

The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the one or more above-defined computer program(s) stored thereon.

The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure further includes a surface identification system for classifying pixels of a scene image showing a surface into surface pixels which represent the surface and non-surface pixels which do not represent the surface, wherein the identification system comprises one or more processors and a computer-readable medium; the computer-readable medium comprises computer instructions stored therein, wherein the instructions, when executed by the one or more processors, cause the one or more processors to carry out the steps of one of the above-defined surface identification methods.

The present disclosure further includes a control system for a machine such as a vehicle or a robot, comprising a surface identification system as defined above.

The present disclosure further includes a training system for training a surface identification system to classify pixels of a scene image showing a surface into surface pixels which represent the surface and non-surface pixels which do not represent the surface; wherein the training system comprises one or more processors and a computer-readable medium; the computer-readable medium comprises computer instructions stored therein, wherein the instructions, when executed by the one or more processors, cause the one or more processors to carry out the steps of one of the above-proposed training methods.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

BRIEF DESCRIPTION OF THE DRAWINGS

Fig. 1 is a schematic view showing a vehicle comprising a surface identification system and a remote server comprising a training system in accordance with the present disclosure;

Fig. 2 is a schematic representation of the functional units of the surface identification system represented on Fig.1;

Fig. 3 is a detailed schematic representation of an embedding module, which is one of the functional units represented on Fig.2;

Fig.4 is a block diagram illustrating the steps of a surface identification method according to the present disclosure;

Fig.5 is an exemplary scene image representing a scene in which anomalous objects present on a road have to be detected;

Fig.6 is a segmentation map obtained based on the scene image of Fig.5;

Fig.7 is a reconstructed scene image obtained based on the scene image of Fig.5;

Fig.8 is a reconstruction error map obtained based on the scene image of Fig.5 and the reconstructed scene image of Fig.7;

Fig.9 is a surface pixels map obtained with the surface identification system schematically represented on Fig.1, based on the scene image of Fig.5; and

Fig.10 is a schematic representation of embedding vectors obtained with the embedding module of the surface identification system schematically represented on Fig.1.

DETAILED DESCRIPTION OF EMBODIMENTS

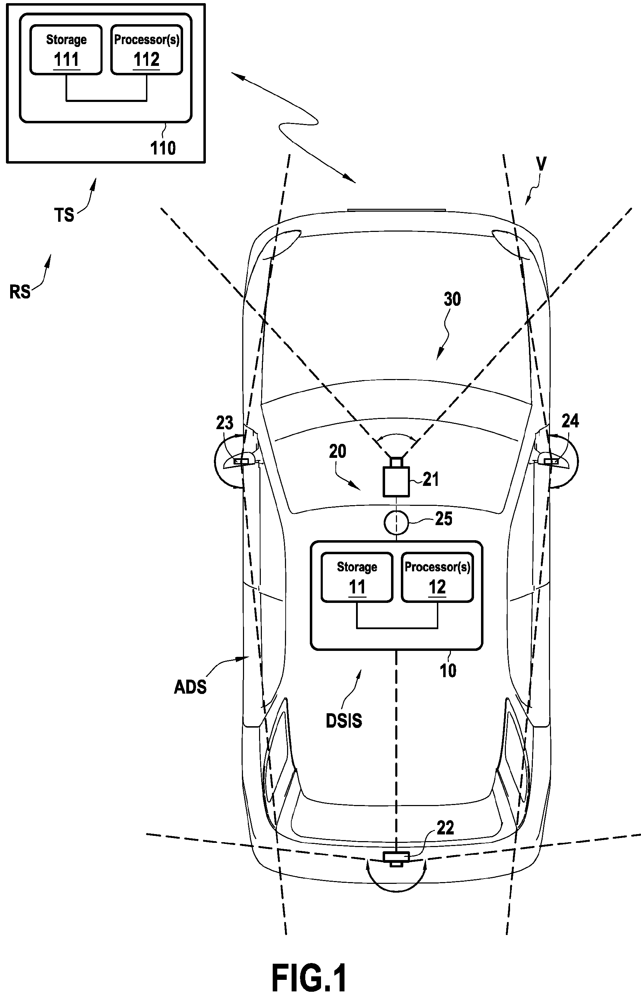

Surface identification methods and systems, and training methods and systems for training such surface identification systems which constitute exemplary embodiments of the present disclosure are now going to be presented in relation with Figs.1-4. Wherever possible, the same reference signs will be used throughout the figures to refer to the same or like parts or functional units.

As explained before, these methods and systems have been developed in order to analyze images showing a specific surface, in order to identify, in these images, which pixels correspond to that specific surface. In the present embodiment, the surface which has to be identified is the surface of the road on which a vehicle V is located.

Although in the present document the methods and systems of the present disclosure are mainly presented in a context in which the surface is the surface of a road, it should be understood that these methods and systems can be used to detect any type of surface, as long as the system is initially configured (trained) to identify the considered surface. For instance, the methods and systems presented herein are also applicable to detect which pixels of a scene image showing a seascape are surface pixels which represent the sea, and conversely which pixels represent other floating objects or vessels present on the surface of the sea.

Vehicle V comprises an autonomous driving system ADS, which itself comprises a driveable surface identification system DSIS.

The ADS system comprises a set of sensors 20, each sensor being connected to a computer 10, a set of actuators (not shown), and other components. The set of sensors 20 comprises in particular sensors configured to perceive an external environment of vehicle V, which include in particular a front camera 21, a rear camera 22, lateral cameras 23,24 and a roof-mounted lidar 25. The front camera 21 is configured to acquire images of the road ahead of vehicle V. These images, herein called 'scene images', show the scene ahead of vehicle V. Accordingly, part of these images represents the surface of the road.

These images constitute scene images si on which the pixels of the surface of the road have to be identified as 'road-surface pixels', in order to perform autonomous driving or to assist the driver to drive vehicle V. Conversely, pixels which are not the surface of the road have to be identified as non-surface (or 'non-road') pixels.

When vehicle V is in operation, at each time step, the image si acquired by camera 21 is transmitted to the surface identification system DSIS. The identification system DSIS acquires this image si, and attributes to each pixel of this image a score representing a probability for this pixel to belong to the driveable surface of the road. The resulting score map scm is then outputted.

In some embodiments, the score map scm may be thresholded, to obtain a driveable surface mask sum in which the pixels of the driveable surface of the road are distinguished from the pixels not representing this surface.

The driveable surface of the road as identified in the score map scm (or the driveable surface mask sum) is transmitted to the autonomous driving system ADS. On this basis, the autonomous driving system ADS issues appropriate controls to drive vehicle V on the road.

Most of the components and functional units of the autonomous driving system ADS are on-board vehicle V; however, part of them can be remote components, and can be for instance part of a remote server RS. The remote server RS and vehicle V include not-shown communication means to exchange information.

The vehicle V is a car, which represents a non-limiting example of a mobile machine - in this case, a vehicle - which can utilize (for instance: which can be controlled based on) surface pixels maps outputted by a surface identification system according to the present disclosure. In the embodiment presented here, the autonomous driving system ADS of vehicle V is configured to drive vehicle V on the driveable surface of the road, identified in the surface pixels map spm.

As it will be explained below, the surface identification system DSIS is a trainable, neural network-based system.

For training purposes, the surface identification system DSIS is implemented initially on a training system TS implemented on the remote server RS.

The training system TS is configured to train the identification system DSIS, based on training dataset(s) prepared beforehand. When the identification system DSIS is trained, it is deployed on vehicle V.

Then, in operation, when vehicle V is moving on a road, the surface identification system DSIS is used to identify the driveable surface of the road in real time in the images acquired by camera 21 and to transmit the successive surface pixels maps to the autonomous driving system ADS which on this basis drives vehicle V.

In vehicle V, the surface identification system DSIS is implemented on a central driving computer 10 ('computer 10') and actually, the functions of the surface identification system DSIS, as well as most functions of the autonomous driving system ADS, are implemented on computer 10.

Computer 10 comprises a non-transitory storage medium 11 and one or more processor(s) 12. The one or more processors 12 are intended to be representative of the presence of any one or more processors or processing devices, of any of a variety of forms. In addition, although computer 10 is represented on Fig.1 in a single box, it may be a distributed calculation system, comprising a plurality of processors, possibly physically arranged on different locations. For instance, part of processors 12 may be part of remote server RS.

The training system TS is configured to implement training methods according to the present disclosure.

The training system TS is implemented on the remote server RS. The training system TS is implemented on a main training computer 110 ('computer 110'), which comprises a non-transitory storage medium 111 and one or more processor(s) 112. The one or more processors 112 are intended to be representative of the presence of any one or more processors or processing devices, of any of a variety of forms. In addition, although computer 110 is represented on Fig.1 in a single box, it may be a distributed calculation system, comprising a plurality of processors, possibly physically arranged on different locations.

A computer program PTrSI comprising instructions which, when they are executed by the processor(s) 112, cause these processor(s) to carry out the steps of training methods according to the present disclosure for training the surface identification system DSIS is stored in storage medium 111. A computer program PSI comprising instructions which, when they are executed by the processor(s) 12, cause these processor(s) to carry out the steps of a surface identification method used to identify the driveable surface of the road ahead of vehicle V by implementing the surface identification system DSIS, is stored in storage medium 11. The programs PTrSI and PSI and the storage media 111 and 11, are examples respectively of computer programs and computer-readable recording media according to the present disclosure. The training program PTrSI is executed to train the driveable surface identification system DSIS, while the surface identification program PSI is executed to identify the surface pixels in the scene image showing the road ahead of vehicle V.

The memories 111, 11 of the computers 110,10 constitute non-volatile recording media according to the present disclosure, readable respectively by the one or more processor(s) 112, 12 and on which the programs PTrSI and PSI are recorded.

Architecture

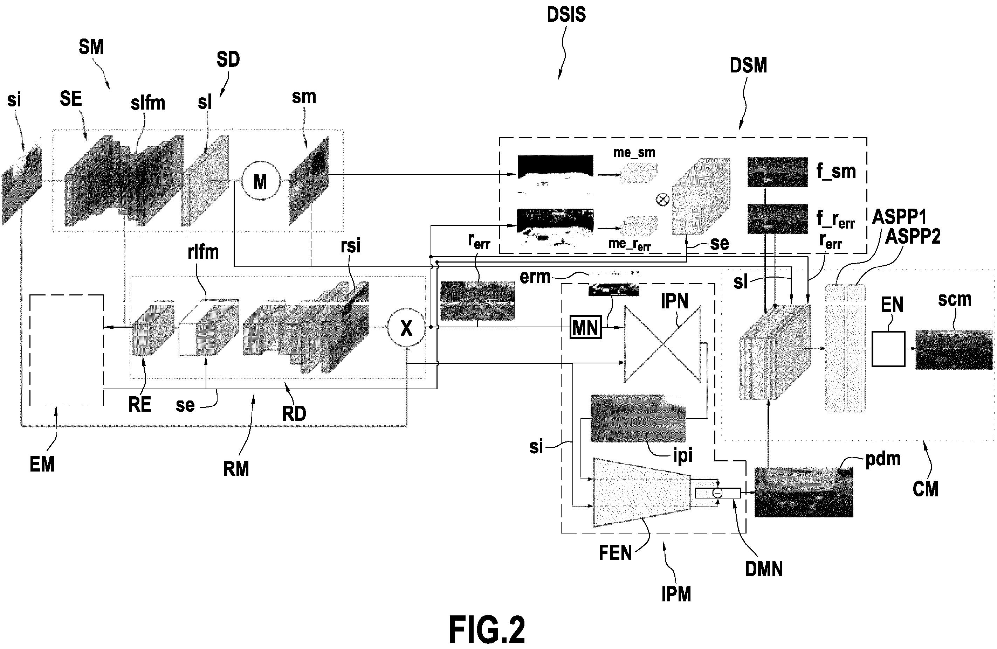

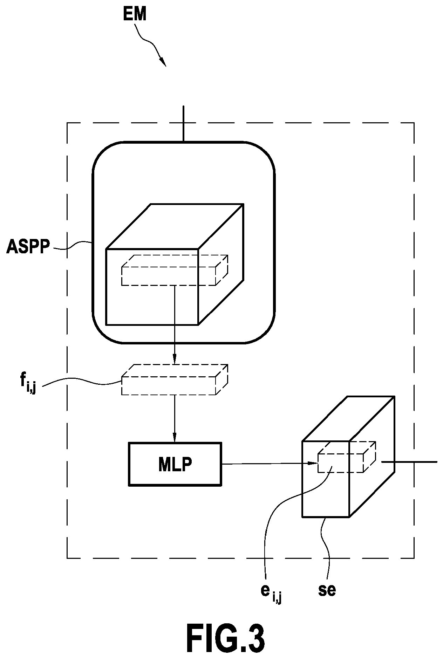

An exemplary functional architecture of the surface identification system DSIS is now going to be presented in relation with Figs.2 and 3.

The surface identification system DSIS mainly comprises a Segmentation Module SM, an Embedding Module EM, a Reconstruction Module RM, a Coupling Module CM (each of these modules comprises a neural network), and a comparison unit X.

In addition, it may comprise one or both of the following modules: A Distance-based Scoring Module DSM and an InPainting Module IPM.

The segmentation module SM

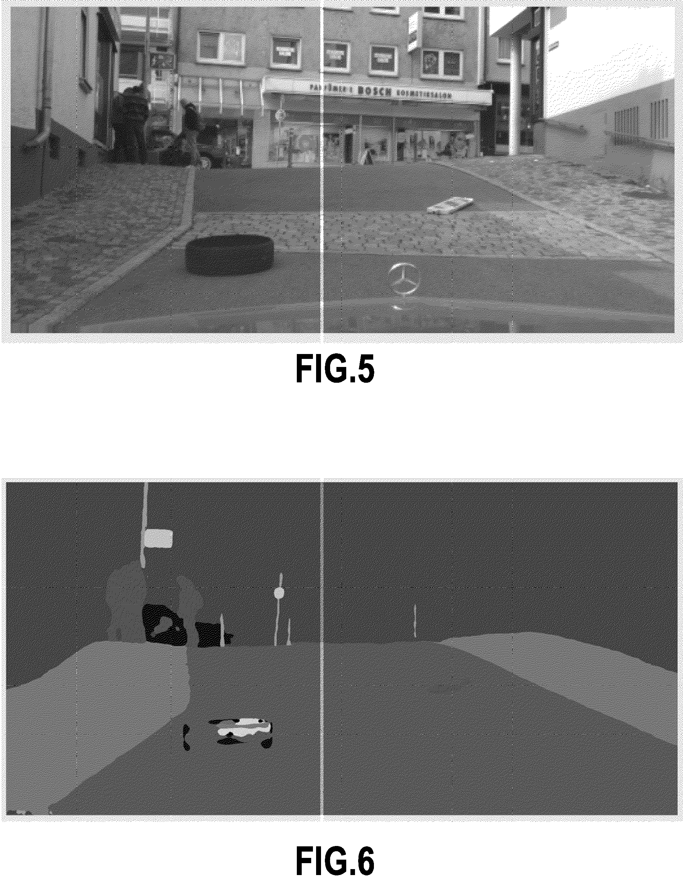

An exemplary scene image si is shown on Fig.5. It shows a portion of a road in front of a vehicle, in an urban environment. The road is made essentially of asphalt, but also comprises a band covered of cobblestones. The sidewalks are made of cobblestones. In addition, two 'anomalous' objects lie on the road surface: A tire, and a road signal shaped as a rectangular plate.

The segmentation module SM is a neural network configured to input a scene image such as the image si, and, based on this input, to output a segmentation: a segmentation map sm, or at least segmentation logits sl, which is a non-normalized version of the segmentation map sm.

A segmentation map such as the segmentation map sm, as known per se, is a map in which all the pixels of the image are classified in predetermined semantic classes (such as: 'Road', 'Ego-vehicle', 'Other vehicles', 'Pedestrians', 'Sky', etc). As an example of a segmentation map, the segmentation map sm outputted by the segmentation module SM based on image si is shown by Fig.6.

As it will be explained below, in the present embodiment, the segmentation map sm, the logits sl and a segmentation latent features map slfm calculated by the encoder part SE of the segmentation module SM are outputted by the segmentation module SM.

The scene image si is typically an image of a scene in which a specific surface, for instance the surface of a road, has to be detected. This specific surface can be any outer surface of an object (a real object). The scene image si is typically an image acquired by a camera, for instance, in the proposed embodiment, the front camera 21 of vehicle V.

In some embodiments, additional data are inputted by the Segmentation Module SM. In this case, the input of the Segmentation Module SM, is not limited to a scene image. It can be a set of images, or a tensor obtained for instance by merging or based on multiple images or multiple data (including for instance lidar and/or radar data), etc.

The segmentation module SM comprises a segmentation encoder SE and a segmentation decoder SD.

The segmentation encoder SE is a neural network configured to input the scene image si and encode it into the above-mentioned segmentation latent features map slfm.

The segmentation decoder SD is a neural network configured to input the segmentation latent features map slfm and decode it so as to output the segmentation (in the present embodiment: the logits sl and the segmentation map sm).

The segmentation map sm is a datum in which the pixels are classified into a certain number of semantic classes (or categories). Among the semantic classes, at least one class corresponds to surface pixels, and at least one class corresponds to non-surface pixels. (No class may comprise surface pixels and non-surface pixels).

The most downstream layer of the segmentation decoder SD is a normalization module M. This normalization modules applies a normalization operation such as Softmax or Argmax to the segmentation logits sl of the segmentation decoder SD, and thereby outputs the segmentation map sm.

With the meaning of the present document, the segmentation transmitted to calculate the surface pixels map (spm) at step S70 is preferably the segmentation logits sl. However, in other embodiments, the segmentation map sm can be transmitted to the Coupling Module SM instead of the segmentations logits sl to calculate the surface pixels map (spm) at step S70. This latter case is illustrated by the dotted link below the sm map on Fig.2.

Additional information which can be used to implement the Segmentation Module can be found in Refs.[1] and [2].

The Embedding Module EM

The Embedding Module EM is a neural-network-based functional unit configured to input the segmentation latent features map slfm, and, based on this input, to calculate a segmentation embedding se.

The Embedding Module is configured, at each time step, to output a segmentation embedding se. As mentioned before, this segmentation embedding se is a map. At each location (i,j) in the height and width dimensions of this map, the component of the segmentation embedding is an embedding vector.

The Embedding Module EM is specially configured to address the data utilization problem of learning multi-modal road appearances.

In some embodiments, the segmentation latent features map slfm is passed through the Embedding Module EM; the segmentation embedding se outputted by the Embedding Module EM (and no other data) is then transmitted to the Reconstruction Module RM to reconstruct the initial image of the scene (the scene image si) as a reconstructed scene image rsi, as it will be explained below.

In other embodiments and for instance in the embodiment presented herein, the segmentation latent features map slfm is inputted both to the Embedding Module EM and to an upstream portion (called the Reconstruction Encoder RE) of the Reconstruction Module RM.

Various architectures can be used for the Embedding Module EM. For instance, the Embedding Module may have an architecture based on a ResNet 18.

In the embodiment presented here, the Embedding Module EM actually comprises two neural-network-based units: Upstream, an atrous spatial pyramid pooling block ASPP (as an example of a functional unit performing spatial pooling); and downstream, a multi-layer perceptron MLP (Fig.3).

The atrous spatial pyramid pooling block ASPP is a neural network of the type proposed by Ref.[2].

Such neural network is configured to perform dilated convolutions and to extract feature representation at different spatial resolutions (i.e. different scales).

In order to perform spatial pyramid pooling, based on the scene image si, the ASPP block calculates several resampled images, at different (height and width) resolutions.

In the ASPP block, for each spatial location, a features vector $f_{i,j} \in R^{CEM}$ (where $C_{EM}$ is the number of channels of the Embedding Module) is computed. In this embedding vector $f_{i,j}$, the atrous spatial pyramid pooling block ASPP encodes local contextual features for location (i,j).

The ASPP block is specially configured to output the concatenation of the features extracted with different dilations.

Now, in a traditional ASPP block, the most downstream layers of the ASPP block are usually configured to merge the features calculated for receptive fields of different sizes. By contrast in the present embodiment, these downstream layers are not necessary, since the multi-resolution information is exploited by the MLP network.

Therefore the ASPP block of in the present embodiment can be obtained by removing the last $1 \times 1$ conv. layer, the Batch Normalization layer and the ReLU layer of the standard ASPP block proposed by Ref.[2].

Thanks to the specific configuration of the ASPP block described above, backbone features f with higher resolution can be utilized without losing the additional contextual information from larger receptive fields in later stages.

The map of the vectors $f_{i,j}$ outputted by the ASPP block is transmitted to the Multi-Layer Perceptron MLP. On this basis, the MLP calculates the segmentation embedding se, which is the map of the embedding vectors $e_{i,j}$.

The MLP comprises three fully connected layers with ReLU activations, and outputs the segmentation embedding se.

In the segmentation embedding outputted by the Embedding Module EM, among the embedding vectors, the embedding vectors at locations (i,j) which mainly correspond to surface pixels of the scene image si are called surface embedding vectors sev. The other embedding vectors are called non-surface embedding vectors and noted nsev.

The embedding module EM calculates the segmentation embedding so that the embedding vectors have a specific geometric distribution.

The surface embedding vectors sev, that is, the embedding vectors mainly associated with surface pixels of the scene image constitute a cluster, noted cluster c (in the feature space of the embedding module).

The embedding module EM is specifically configured to output the segmentation embedding se so that essentially all non-surface embedding vectors nsev are separated from cluster c.

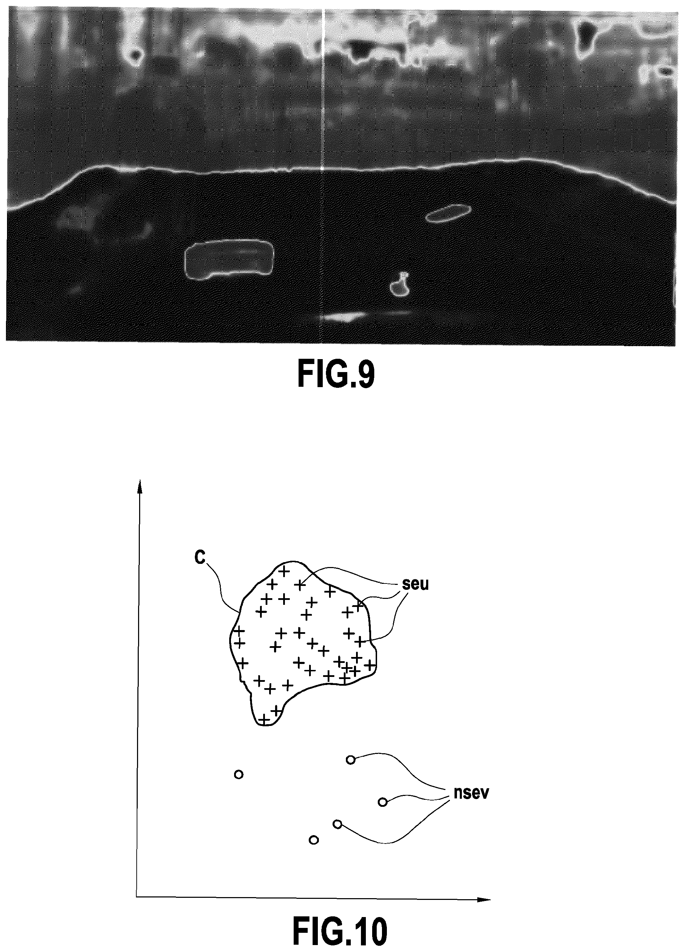

This feature of the embedding module EM is illustrated by Fig.10. To facilitate the understanding, this feature is represented in the case where the feature space of the embedding module is of dimension 2, although in general it is of a much larger dimension.

The surface embedding vectors form the cluster c (Fig.10).

Importantly, essentially all, and preferably all non-surface embedding vectors nsev are separated from the cluster c of the surface embedding vectors sve. In other words, the non-surface embedding vectors nsev, in the feature space, are located at a distance from cluster c.

The embedding module is configured to achieve this result at least separately for each scene image si.

Now, in some embodiments the embedding module EM is configured to achieve this feature over multiple segmentation embeddings, calculated for the respective scene images si of a set of scene images.

In this case indeed, the embedding module is configured to calculate the segmentation embeddings se so that essentially all the non-surface embedding vectors nsev of the various segmentation embeddings se outputted based on the set of scene images are separated from the combined cluster cc obtained by combining (or merging) the clusters c obtained respectively for each segmentation embedding, and which contain the surface embedding vectors sev of these segmentation embeddings.

Therefore, the combined cluster cc is the set of segmentation vectors which includes all the surface embedding vectors (sev) of surface embeddings outputted based on the images of the set of scene images.

In most cases, the desired configuration of the embedding module is obtained by training. Examples of loss functions and training methods that can be used to configure the embedding module EM are presented below in the section describing how to train the DSIS system.

The Reconstruction Module RM

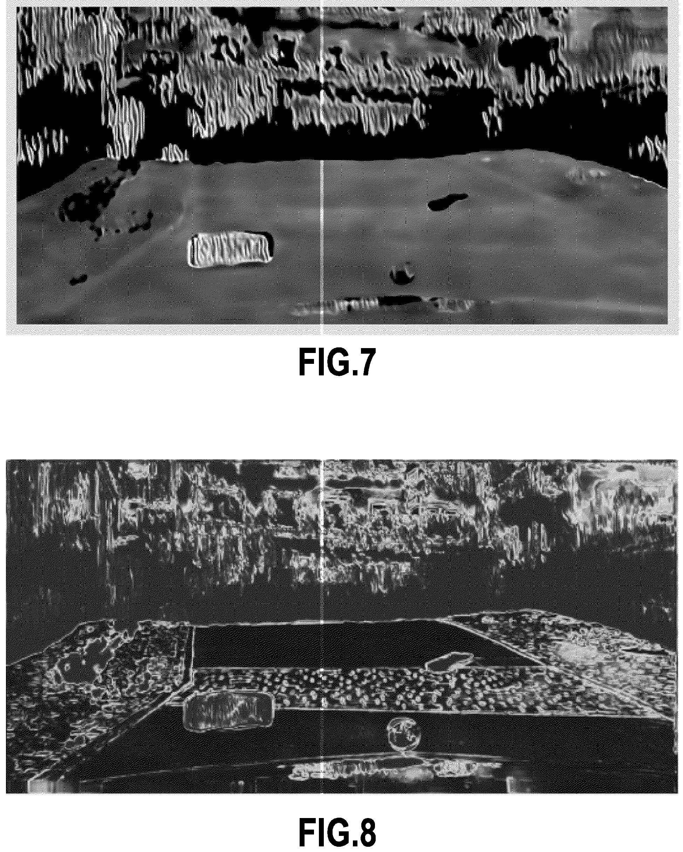

The reconstruction module RM is configured to output a reconstructed scene image rsi. As an example, the reconstructed scene image rsi obtained based on scene image si is shown on Fig.7.

The reconstruction module must be configured or trained such that, when the reconstructed scene image rsi is compared with the initial scene image si, the pixels of the road (the surface pixels) be very similar to the pixels of the scene image, while the non-surface pixels conversely be attributed values quite different from the values of the corresponding pixels of the initial scene image si,.

In order to achieve this objective, the Reconstruction Module RM is a neural network configured to input at least the segmentation embedding se outputted by the Embedding Network EN, and, based on this input, to reconstruct the scene image si as a reconstructed scene image rsi; in addition, a reconstruction error err being a per-pixel error between a reconstructed scene image rsi and the scene image si, the Reconstruction Module is configured to minimize the reconstruction errors err for the surface pixels and to maximize the reconstruction error err for the non-surface pixels (as will be explained in the section below describing how to train the DSIS system).

In the present embodiment, as explained above, in addition to the segmentation embedding se, the Reconstruction Module also receives the segmentation latent features map slfm as an additional input.

The Reconstruction Module RM, in the present embodiment, comprises upstream the previously mentioned Reconstruction Encoder RE, and downstream a Reconstruction Decoder RD.

The Reconstruction Encoder RE outputs a reconstruction latent features map rlfm.

In the present embodiment, the Reconstruction Encoder RE is constituted by a single convolutional layer.

The Reconstruction Encoder RE usually (as in the case of the present embodiment) reduces the dimension of the segmentation latent features map slfm received from the Segmentation Encoder SE.

During training, the embedding network EN learns to incorporate in the segmentation embedding se the most appropriate features, which then makes it possible for the reconstruction module RM to calculate a reconstructed image rsi efficiently in order to achieve the above-mentioned objectives.

In the present embodiment, the reconstruction decoder RD is configured to input the reconstruction latent features map rlfm and the segmentation embedding se concatenated to each other.

On this basis, the reconstruction decoder RD progressively upsamples the feature channels and reconstructs the scene image si, thus yielding the reconstructed scene image rsi. The reconstructed scene image rsi usually resembles the original scene image si. However, for some loss functions (depending in particular on the reconstruction term of the loss function), the reconstructed scene image rsi may appear visually different from the original scene image; however in all cases, the reconstructed scene image rsi will generate a small reconstruction error for the surface pixels.

In the present embodiment, the reconstruction decoder RD comprises (and in the present embodiment, consists of) four convolutional blocks. Each block is configured to realize twice, in chain, the following operations: bilinear upsampling, 2D convolution, batch normalization, and ReLU (Rectified Linear Unit) activation function. The reconstruction decoder RD progressively reduces the number of feature channels down to finally three channels in the reconstructed scene image rsi (which, in the present embodiment, is an RBG image), at the output of the last convolution layer.

Accordingly, in the present embodiment the reconstruction decoder RD progressively reduces the number of feature channels by a factor of two starting from 128 channels (i.e., 128, 64, 32, 16). The reconstruction scene image rsi is produced by a final $1\times1$ convolutional layer which reduces the 16 channels to 3 channels.

The comparison unit X is configured to input the scene image si and the reconstructed scene image rsi. On this basis, the comparison unit X calculates a reconstruction error map $r_{err}$. In this map, each pixel represents an error err, for the considered pixel, between the reconstructed scene image rsi and the scene image si. As an example, the reconstruction error map $r_{err}$ obtained based on the scene image si and the reconstructed scene image rsi is shown on Fig.8.

Different functions can be implemented by the comparison unit X to calculate the reconstruction error err: the L1 norm, the L2 norm, the SSIM metric, etc.

Additional information which can be used to implement the Reconstruction Module can be found in Ref. [1].

The Coupling Module CM may calculate the surface pixels map spm only on the basis of the segmentation logits sl and the reconstructed error map $r_{err}$.

However, as mentioned before, in some embodiments the performance of the DSIS system is improved by providing additional inputs to the Coupling Module CM. In these embodiments accordingly, the DSIS system may further include one or both of the optional modules: The InPainting Module IPM and the Distance Weighting Module DWM.

These modules will now be described below.

The InPainting Module IPM

To address the issue of consistent anomaly classification, the 'in-painting' technique can be used. The purpose of the InPainting Module IPM accordingly is to reduce the detection of anomaly false positives (the detection of pixels as anomalous pixels, although they are actually pixels of the driveable road surface).

The InPainting Module IPM in the present embodiment actually serves two tasks: (i) identification of false positives (a prominent example is lane markings, since part of them may often be classified as anomalies due to shadows or other appearance degradations) and (ii) refinement of the anomaly segmentation boundary.

This module is based on the principle that an anomaly cannot be predicted from its neighbourhood. Indeed, anomalies are not similar to anything in the image (except themself, e.g. fallen rocks on the road); therefore, an inpainting function should not be able to recreate the anomaly from its neighbourhood.

To implement this reasoning, the InPainting Module comprises successively, in the present embodiment, from upstream to downstream along the data flow, four functional units:

. a Masking Network MN, which masks (e.g., replaces by value '1') the pixels of the error map $r_{err}$ which are considered to be anomalous, and outputs an error mask erm. In the error mask erm, these pixels are the pixels whose value is over a predetermined threshold. In some embodiments, the threshold used by the Masking Network MN is a learned threshold, determined (learned) during training.

. an InPainting Network IPN. The InPainting Network IPN calculates an InPainted image ipi, based on the error mask erm, by 'inpainting' the pixels having value '1' in the error mask erm.

. A Feature Extraction Network FEN, which extracts features of the inputted images si and rsi, so as to calculate perceptual representations respectively for the inputted images si and rsi.

. a Difference Map calculation Network DMN. The Difference Map calculation Network DMN receives the perceptual representations outputted by the Feature Extraction Network FEN respectively based on the scene image si and the InPainted Image ipi and on this basis, calculates an error or perceptual difference map pdm between the InPainted Image ipi and the initial scene image si.

The operations performed by the Masking Network may not be limited to the masking operation. For instance in the present embodiment, once the masking operation has been performed, the Masking Network further applies a morphological dilation (with a range of 7 pixels for instance) to the masked error map, to obtain the error mask erm. Performing such morphological dilation increases the robustness of the mask by including in the regions considered anomalous (or potentially anomalous) pixels close to these regions.

To implement the InPainting Network IPN, any module adapted to perform the inpainting function can be used, for instance a network implementing the DeepFillv2 technology (see Ref.[7]). This latter method allows for in-painting of areas defined by a free-form mask( e.g. random areas in the image),

The initial scene si and the InPainted Image ipi are successively inputted to the Feature Extraction Network FEN.

The Feature Extraction Network can be implemented as a convolutional neural network (CNN), preferably but not necessarily configured to extract features at different scales. The Feature Extraction Network FEN may be preferably pre-trained on large amount of images, to ensure that two similar images are represented similarly in the feature latent space.

In some embodiments, the Feature Extraction Network FEN and the Difference Map calculation Network constitute a single unit.

However, they can also constitute distinct functional units. In this case, the Difference Map calculation Network DMN may be configured to only perform a simple comparison function (such as a difference function) to calculate the difference map pdm.

In the present embodiment, as the Feature Extraction Network FEN, a VGG network (as disclosed by Ref. [6]) is used.

In this case, the perceptual representations can for instance be extracted from three intermediate layers of the VGG network - conv1 2, conv2 2 and conv3 3.

In the present embodiment, the difference map pdm between the two perceptual representations successively outputted by the Feature Extraction Network FEN is calculated by the Difference Map calculation Network DMN and is transmitted to the Coupling Module CM.

Various architectures can be used for the Difference Map calculation Network DMN, as long as the Difference Map calculation Network DMN network makes it possible to compare the two perceptual representations representing respectively the initial scene image si and the InPainted Image ipi. Preferably, the Difference Map calculation Network DMN is configured to output a score at different pyramid levels (resolutions).

To perform its function, the Difference Map calculation Network DMN may essentially compare the two perceptual representations using any available metric; for instance, using an L1 norm, an L2 norm, the SSIM metric, etc.

In the present embodiment, the perceptual difference map pdm is calculated as a perceptual loss.

The InPainting perceptual difference map pdm is accordingly calculated between the scene image si and the InPainted image ipi for instance as in Refs.[8] or [9]. This loss term represents the mean Manhattan distance between features extracted from the Difference Map calculation Network DMN at different convolutional layers.

The inpainting perceptual difference map pdm is a weighted average of the channel-wise mean distance with sigmoid non-linearity $\sigma(\cdot)$ to normalize the error to (0,1) range:

$$\mathrm{pdm} = \sigma \left( \sum_{i=1}^{n} U_{bl}\left(\frac{w_i}{C_i} \left( \sum_{c=1}^{C_i} \left\| \Phi^{(i)}(I) - \Phi^{(i)}(\hat{I}) \right\|_1 \right)\right)\right)$$

where $C_i$ is the number of channels of the i-th layer and function $U\,bl\,(\cdot)$ is bilinear interpolation to resize the distance maps to common size (i.e. the size of the scene image si), and $\Phi()$ is the output of the FEN network (the VGG network).

The weights $w_i = (w\,0\,, w\,0\,, ... , w\,n\,)$, for each used convolutional layer of the VGG network, are learned during training.

The Distance-based Scoring Module DSM

The segmentation embedding se is further exploited for the purpose of extracting on-line appearance distance-like scores. This additional (and optional) module addresses the problem of increased false positive classifications induced by unknown (i.e. not seen during training) road appearances.

To address this problem, the Distance-based Scoring Module DSM computes a road similarity score with respect to the observed scene image si, in the embedding space. This module is based on the hypothesis that a mean representation of the observed road in the embedding space (even though computed from a noisy and incomplete list of all correct road embeddings in the observed image) would yield a small distance to all correct road embeddings, and therefore, could be used to identify these correct road embeddings.

To utilize this assumption, one or more new feature channel(s) $f_d$ of dimension Hf x Wf are calculated, where Hf and Wf are the height and width dimensions of the segmentation latent features map slfm.

Each feature channel is calculated based on a datum usually derived from the scene image (such as the segmentation sl or sm, or the reconstructed error map $r_{err}$ ). The datum however can also be a datum representative of the scene shown in the scene image si, for instance based on data acquired by another sensor than the camera which produced the scene image si.

The feature channel(s) calculated by the Distance-based Scoring Module DSM is transmitted to the Coupling Module CM, to improve the performance thereof.

Each feature channel is computed location-wise, where for each spatial location or pixel (y, x) of the image, its value is computed as follows:

$$f_{x,y} = \left\| \bar{e} - e_{x,y} \right\|$$

where

$$\bar{e} = \frac{1}{\sum_{i,j} M_{i,j}} \sum_{(i,j) \, s.t. M_{i,j}=1} e_{i,j}$$

The variable $\bar{e}$ is the 'mean embedding' mentioned before. It is computed as the means of selected embedding vectors which have been selected beforehand based on the datum used to calculate the feature channel.

Several methods can be used to select the embedding vectors used to calculate the mean embedding. In each case, the selected embedding vectors are embedding vectors whose locations have been identified in said datum as corresponding or probably corresponding to surface pixels.

In the embodiment presented herein, the Distance-based Scoring Module DSM is configured to calculate two feature channels f_sm and f_$r_{err}$, respectively on the basis of the segmentation map sm and the reconstructed error $r_{err}$.

In the present embodiment, two feature channels f_sm and f_$r_{err}$ are calculated. They are calculated as follows.

First, a binary mask m_sm is obtained, by simply setting to '1' the road-pixels (the pixels classified in the 'driveable road surface') in the segmentation map sm, and to '0' the other pixels.

In parallel, a binary mask m_$r_{err}$ is obtained by applying a threshold to the reconstructed error $r_{err}$.

Then, for each feature channel (resp f_sm and f_$r_{err}$), a mean embedding (me_sm, me_$r_{err}$) is calculated:

For all the pixels set to '1' (identified as 'driveable road surface') on the mask m_sm, a mean road embedding value me_sm of the corresponding embeddings $e_{x,y}$ in the segmentation embedding se is calculated.

The same operation is performed based on the mask m_$r_{err}$ instead of the mask m_sm, which yields a second value me_$r_{err}$ of the mean road embedding.

Finally, the two feature channels f_sm and f_$r_{err}$ are calculated as follows:

For each pixel (i,j) of the scene image si, a distance is calculated between the associated embedding vector $e_{x,y}$ and the corresponding mean embedding (respectively me_sm and me_$r_{err}$). Any suitable distance between two vectors can be used in this purpose. It can be an L1 norm, an L2 norm, etc.

The images containing these distance values constitute the two feature channels f_sm and f_$r_{err}$. In these images, a larger value - corresponding to a larger distance between the mean embedding and the embedding of the considered pixel may reveal that the considered pixel is an anomalous pixel.

Note, in the embodiment presented herein, the two feature channels f-sm and f-$r_{err}$ - are calculated. However, other data can be used as an input to calculate additional (or alternative) feature channels, to increase robustness to the failure modes of the respective sources of the road labellings.

The calculated feature channel(s) (f-sm and f-$r_{err}$) are then transmitted to the Coupling Module CM.

The coupling module CM

The coupling module CM is configured as follows.

The segmentation coupling module is configured to input the segmentation (in the present embodiment: the segmentation logits sl) and the reconstruction error map rem.

The segmentation (sl) is channel-wise concatenated with the reconstruction error map rem.

The coupling module fuses the segmentation logits sl, the image reconstruction error $r_{err}$, the embedding scoring features f_sm and f_$r_{err}$ and the InPainting perceptual difference map pdf to produce the surface pixels map spm. As an example, the surface pixels map spm ouputted by the Coupling Module based on these data is shown on Fig.9.

The first input, the segmentation comprises the information relative to pixels identified as non-surface pixels by the segmentation module SM. These pixels indeed are pixels which have been identified during semantic segmentation as not representing the road, for instance representing the sky, a vehicle, etc. (e.g., identified as belonging to a known, non-surface class).

The second input, the reconstruction error map, identifies pixels which constitute "unknown anomalies". Although these anomalies normally do not belong to a known category used by the segmentation module, they can be discovered by the reconstruction module since they will appear as poorly reconstructed image regions.

Advantageously, by coupling of the two above-mentioned inputs (segmentation and reconstruction error map rem), the surface identification system DSIS can identify surface pixels not only belonging to known non-surface classes, but also non-surface pixels of unknown type (for instance corresponding to small isolated objects present on the road surface), which could often be misclassified by the segmentation module.

The concatenated data obtained by concatenating the above-mentioned data is inputted in a first block ASPP1. The output of the block ASPP1 is inputted into a second block ASPP2. Each one of blocks ASPP1 and ASPP2 is configured to perform spatial pooling, preferably for different sizes of receptive fields (spatial pyramid pooling), in particular using the atrous spatial pyramid pooling (ASPP) function as defined by Ref.[2].

The output of block ASPP2 is inputted into an Extraction Network EN.

The Extraction Network EN inputs the map outputted by the second ASPP block (ASPP2) and calculates the surface pixels map spm as a two-channel map.

The Extraction Network EN can comprise essentially one (1x1) convolutional layer with ReLU activation.

The output of the coupling module CM is the surface pixels map spm. This map spm may have two channels corresponding to the surface class and non-surface class and is normalized by a softmax layer.

The first channel forms the "surface" image in which the surface pixels are set to 1 and the non-surface pixels to 0, and the second channel forms the non-surface image, in which the surface pixels are set to 0 and the non-surface pixels to 1. Accordingly, the pixels of the surface are identified in the surface image. Other structures can be chosen to constitute the surface pixels map, as long as the pixels of the surface can be readily identified in this map.

Exploitation

The surface identification method according to the present disclosure is performed iteratively in order for the vehicle driving system to have, at each time step, up-to-date information about the driveable surface of the road on which vehicle V is moving.

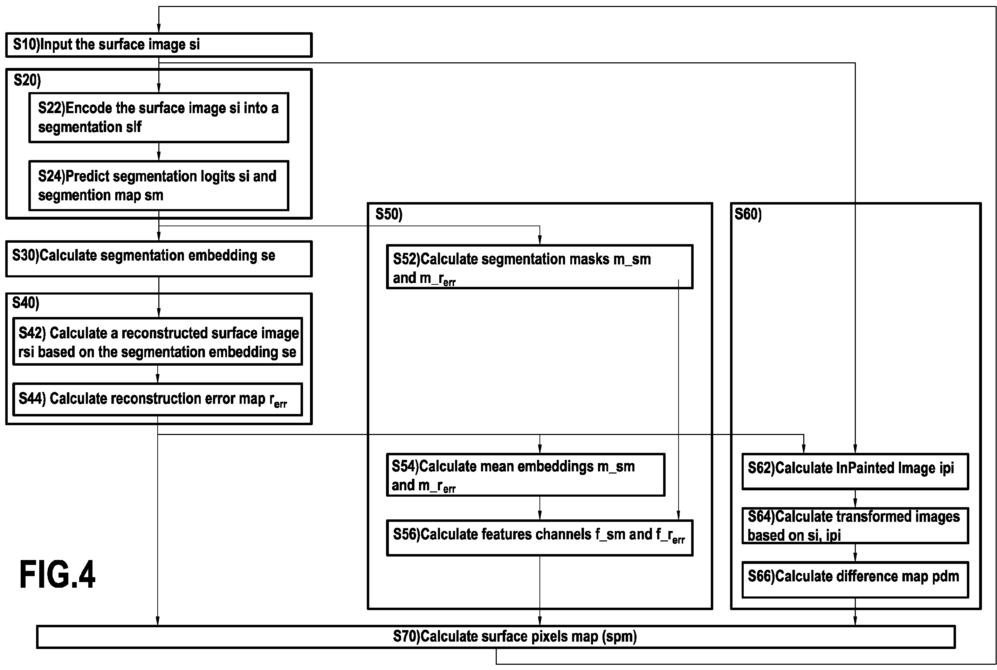

Fig.4 illustrates how, at each time step, the surface identification method according to the present disclosure is performed, using the driveable surface identification system DSIS.

First, a scene image si is inputted (step S10).

Then at step S20, the scene image si is passed through the Segmentation Module SM:
At step S22, the segmentation encoder SE encodes the scene image si into a segmentation latent features map slfm.

Then at step S24, the segmentation decoder SD, based on the segmentation latent features map slfm, calculates the segmentation logits sl. The segmentation logits constitute a segmentation in which the surface pixels are classified in surface categorie(s) which represent(s) the surface, while the non-surface pixels are classified in non-surface categorie(s).

The segmentation logits sl are normalized by the normalization module N to obtain the segmentation map sm.

Then, the segmentation latent features map slfm is inputted into the embedding network EN, in order to obtain the segmentation embedding se (step S30).

In a first sub-step (S32), the ASPP block processes the segmentation logits sl, and thus calculates the map of embedding vectors $f_{i,j}$.

This map is then transmitted to the multi-layer perceptron MLP which, on this basis, calculates the segmentation embedding se (step S34).

The segmentation latent features map slfm is transmitted to the Reconstruction Encoder RE of the Reconstruction Module. On this basis, the Reconstruction Encoder RE calculates a reconstruction latent features map rlfm.

In addition to the segmentation latent features map slfm, the segmentation embedding se is also transmitted to the Reconstruction Module, to be combined with the reconstruction latent features map rlfm outputted by the Reconstruction Encoder.

Accordingly, the segmentation embedding se and the reconstruction latent features map rlfm are concatenated and transmitted to the Reconstruction Decoder RD which, on this basis, calculates the reconstructed image rsi, a reconstructed version of the scene image si (step S42).

The scene image si and the reconstructed image rsi are both transmitted to the comparison unit X. Based on these data, the comparison unit X calculates the reconstruction error map $r_{err}$ (step S44).

In addition, the following operations are carried out.

The following steps are performed to obtain the feature channels f_sm and f_$r_{err}$ supplied to the Coupling Module CM (step S50).

The segmentation map sm and the reconstruction error map $r_{err}$ are transmitted to the Distance-based Scoring Module DSM.

As a first step S52, on this basis, the DSM module calculates the masks m_sm and m_$r_{err}$.

As a second step S54, the DSM module then calculates the mean road embeddings me_sm and me_$r_{err}$.

As a third step S56, further based on the segmentation embedding se, the DSM module finally calculates the feature maps f_sm and f_r$_{err}$.

In addition, the following steps are performed to obtain the perceptual difference map pdm supplied to the Coupling Module CM (step S60).

The reconstruction error map r$_{err}$ is transmitted to the In-Painting Module IPM. In this module, once the error mask erm has been calculated, it is transmitted to the In-Painting Network IPN which calculates the In-Painted Image ipi (step S62).

The In-Painted Image ipi and the scene image si are successively passed through the VGG network. The perceptual difference map pdm between the two perceptual representations successively outputted by the VGG network is calculated (step S64).

Finally, the segmentation logits sl, the reconstruction error map r$_{err}$, the f_sm and f_r$_{err}$ and the perceptual difference map pdm are transmitted to the Coupling Module CM in which they are concatenated (other combination methods can be used). On the basis of this combined information, the surface pixels map spm is calculated by the coupling module CM (step S70). The surface pixels map spm is structured so that its pixels (which correspond to pixels of the scene image si) are classified into surface pixels and non-surface pixels.

The information relative to the driveable surface of the road is then transmitted to the autonomous driving system ADS of vehicle V.

On this basis, the autonomous driving system ADS performs the driving and/or assistance tasks for driving vehicle V or for assisting the driver of vehicle V.

Training

The surface identification system DSIS may be trained by end-to-end training using a loss function L.

However in some embodiments, the training comprises two or more stages. In initial training stage(s), one or more of the modules of the DSIS system are trained separately. Then, during the final training stage, the whole DSIS is trained, by end-to-end training. For instance, during the initial training phase the segmentation module SM may be trained separately, independently of the remainder of the surface identification system

DSIS.

In the present embodiment, a pre-trained network is used to implement the InPainting Network IPN; and the InPainting Network IPN is not further trained (or re-trained) during the training phase of the DSIS system.

Advantageously, an existing (in particular a neural network-based, pre-trained) segmentation module SM can be used. In other words, in order to implement a surface identification system according to the present disclosure, a reconstruction module can be coupled for instance to an "already in-use" semantic segmentation network; then, the reconstruction module and the segmentation coupling module can be trained jointly in order to obtain an operational driveable surface identification system.

Loss function

The training, in particular the end-to-end training, may be performed using a loss function L which is the weighted sum of several terms. The following terms may be used: a triplet loss term $L_{tri}$, a reconstruction loss term $L_R$, and a cross-entropy loss term $L_{xent}$.

The triplet loss term $L_{tri}$

Preferably, a loss term (such as the loss term $L_{tri}$ used in the present embodiment) is specifically based on the output of the Embedding Module.

The purpose of this loss term is to ensure that the Embedding Module, when it outputs segmentation embeddings se, correctly separates the non-surface embedding vectors nsev from the surface embedding vectors sev.

In the present embodiment, a 'triplet' loss term is used to enforce the margin m distance between embeddings of anchor embedding vectors ($e^a$) and non-surface embedding vectors ($e^n$ - 'negative embedding vectors') while minimizing distance to surface embedding vectors ($e^p$ - 'positive embedding vectors'), as follows:

$$L_{tri} = \frac{1}{|T|} \sum_{(a,p,n) \in T} \max(\ \|e^a - e^p\| - \|e^a - e^n\| + m, 0)$$
$$+ \lambda_d \frac{e^n - e^a}{\|e^n - e^a\|} \cdot \frac{e^p - e^a}{\|e^p - e^a\|}$$

where T is the set of triplets (anchor-, surface- and non-surface embedding vectors); |T| is its size.

The last term (the dot product of two normalized vectors) is a directional regularization, weighted by $\lambda_d$ as a weighting factor.

The triplet loss term $L_{tri}$ therefore corresponds to the max-margin triplet loss term proposed by Ref.[5].

Depending on the size of the input image, there can be an excessive number of triplets.

For this reason, a stochastic sampling procedure may be used to randomly choose a limited number of anchor samples (this number can be adjusted based on the available GPU memory).

For instance, the triplets used for the training may be formed using the semi-hard negative mining strategy (see Ref.[5]) to select the negative samples and the easy positive sampling strategy (ESP) (see Ref.[10]) for positive samples. A random subsampling may further be performed if the number of triplets so obtained is too high.

The auxiliary reconstruction loss term LR

The value of the reconstruction term $L_R$ may be obtained by any function which minimizes the reconstruction error for the surface (or road) pixels, and conversely maximizes the reconstruction error for the other pixels, the 'non-surface' (or non-road) pixels.

For instance, the value of the auxiliary reconstruction loss term LR may be computed as:

$$L_R = \frac{1}{2|M_r|} \sum_{x,y} \max\left[0, SSIM\left(u_{\hat{I}}^{x,y}, v_I^{x,y}\right) - \xi\right] M_r^{x,y}$$
$$+ \frac{1}{2|M_a|} \sum_{x,y} \max\left[0, 1 - SSIM\left(u_{\hat{I}}^{x,y}, v_I^{x,y}\right) - \xi\right] M_a^{x,y}$$

where $M_r$ and $M_a$ represent the ground-truth binary mask for the road and not-road (anomalies) pixels respectively, and |M| denotes the number of non-zero elements of a mask M.

The slack variable, $\xi$, was set to 0.001 as in Ref. [1].

The SSIM is the structural similarity index measure proposed by Ref. [4]. For a pixel at location (x, y) of a channel image, SSIM is computed as:

$$SSIM\left(u_{\hat{I}}^{x,y}, v_I^{x,y}\right) = \frac{(2\,\mu_u\,\mu_v + c_1)(2\,\sigma_{uv} + c_2)}{(\mu_u^2 + \mu_v^2 + c_1)(\sigma_u^2 + \sigma_v^2 + c_2)}$$

where $u_{\hat{I}}^{x,y}, v_I^{x,y}$ are local patches of reconstructed image $\hat{I}$ and input image I centered at (x,y); $\mu, \sigma$ are the mean and variance of pixel values in these patches; and c1 and c2 are constants used to normalize SSIM to the (0, 1) range. In the present embodiment, c1 and c2 are set to the default values 0.01 and 0.03.

The cross-entropy loss term $L_{xent}$

$L_{xent}$ is a standard binary cross-entropy loss term.

The $L_{xent}$ term may be calculated as the negative log likelihood loss applied to the binary classification output of the coupling module as:

$$L_{xent} = -\frac{1}{|N|} \sum_{n=1}^{N} (1 - c^n) log(1 - \hat{c}^n) + c^n log(\hat{c}^n)$$

where N is number of pixels, $c^n$ and $\hat{c}^n$ are the ground-truth and the estimated labels for the $n^{th}$ pixel, respectively.

Training dataset

In order to train the surface identification system DSIS, a training dataset is prepared beforehand.

In the training dataset, each sample comprises, as an input: a scene image si; and as groundtruth, a desired surface pixels map spm.

Advantageously, any dataset used for instance to train the semantic segmentation module SM can be used to train the surface identification system. For instance, for training the surface identification system of the present embodiment, the 'CityScapes' dataset (see Ref.[3]) which classifies pixels of road surfaces into 19 classes can be used.

To prepare the training, in the training dataset, for each scene image si, all the pixels classified by the segmentation module SM in a class corresponding to a road surface are labelled as surface pixels, while the other pixels are labelled as non-road, that is, non-surface, pixels.

After this preliminary operation, the surface identification system can be trained. The training is therefore usually performed essentially on the basis of the dataset used for semantic segmentation.

In some embodiments, augmentations to the inpainting mask are generated during training, for the coupling module to learn to recognize inpainting of surface pixels which may be incorrectly classified as anomalies by the reconstruction module, since the surface reconstruction does not always result in low perceptual loss and depends on the image context.

For that reason, a randomly-generated free form mask, as proposed by Ref.[7], is added to the estimated inpainting mask during training.

Training stages

The end-to-end training may be performed in several stages.

For instance, in some embodiments, during the first phase (covering the first few epochs), a loss function $L_1$ may be used, which only comprises the triplet loss term $L_{tri}$.

Then, during a second phase, a second loss function $L_2$ may be used, which only comprises the triplet loss term $L_{tri}$ and the and the auxiliary loss term $L_R$.

Finally, during the final phase of the end-to-end training, a third loss function $L_3$ may be used, which comprises the triplet loss term $L_{tri}$, the auxiliary reconstruction loss term $L_R$. and the cross-entropy loss term $L_{xent}$.

Accordingly, the third loss function can then be defined by the equation:

$$L_3 = \lambda_{xent}\, L_{xent} + \lambda_{tri}\, L_{tri} + \lambda_R\, L_R$$

In this equation, the weights may be set to $\lambda_{xent} = 0.6$, $\lambda_{tri} = 0.2$ and $\lambda_R = 0.2$.

To train the DSIS system of the present embodiment, the triplet loss regularization weight $\lambda_{tri}$ was set to 0.2. The directional regularization weight $\lambda_d$ was also set to 0.2. The initial learning rate was set to 0.001 and polynomial learning rate decay with power of 0.9 was used. For optimization, a stochastic gradient descent with momentum (0.9) and weight decay (5e-4) was used.

In the VGG network used as Feature Extraction Network FEN, the initial values for the weights w vgg is set equally to 0.33.

Results

Using the methods of the present disclosure, quantitative results have been obtained on three standard and one derivative datasets: The Lost-and-found dataset (see Ref.[11]), the Road Anomaly dataset (see Ref.[12]), the Road Obstacles dataset (see Ref.[14]) and the FishyScapes:LaF dataset (see Ref.[15]). For these datasets, the proposed method as implemented by the proposed surface identification system DSIS outperforms the current state-of-the-art methods, and often by a large margin.

A comparison of the method of the present disclosure as implemented by system DSIS, with state of the art image classification methods is illustrated by the two tables below. This section indeed presents the results of two experiments: in Table 1, a comparison to the main state-of-the-art methods; and in Table 2, an comparative study of different embodiments.

Datasets

The evaluation was carried out on the commonly available real-data anomaly detection datasets. Indeed, the following two meta-datasets have been created.

The first one, combining the Lost-and-Found (LaF) [11], Road Anomaly (RA) [12], Road Obstacles (RO) [14] and Fishyscapes (FS) (Ref.[15]) datasets, is denoted LaFRAROFS .

The second meta-datasets created contains the data from benchmark of Ref.[13], including its validation data to utilize all available images, i.e. RO plus new and validation images as described in Ref.[13], and is denoted Obstacle Track+. The Obstacle Track+ dataset is approximately annotated to facilitate the evaluation in the comparative study.

Experimental results

Two experiments were led in order to assess the performance of the proposed system (hereafter noted 'DSIS'), in various embodiments.

All versions of the proposed DSIS system were trained with the same parameters and training data, unless stated otherwise. The standard evaluation protocol was followed, i.e., the evaluation is limited to the road region.

In these experiments, the True Positive Rate (TPR), the False Positive Rate (FPR) and Precision and Recall were evaluated. The results obtained are summarised by two standard performance measures (adopted from Refs. [11],[14] and [15]): FPR at 95% TPR (FPR 95 ) and average precision (AP, i.e. area under the PR-curve) respectively.

The first experiment, whose results are given in Table 1 below, evaluates the benefit of the explicit embedding space for training data use by training the baseline method with and without the explicit embedding space using different subsets of training data.

In this experiment, three types of training data are used to evaluate the effectiveness of the embedding module of the present disclosure.

The first two datasets (Cityscapes and S(Cityscapes,BDD100k)) test the ability to model multi-modal road appearance. For that purpose, the CityScapes (Ref.[3]) and a dataset combining the CityScapes dataset and the BDD100k of Ref.[16] and which is further subsampled (function 'S') are used to have a similar number of training examples either for the CityScapes dataset alone or for the combination of the CityScapes and BDD100k datasets.

The training images from the respective datasets were chosen at random and fixed for all experiments. The subsampled dataset is denoted as S(CityScapes,BDD100k).

Lastly (last two lines of Table 1), the ability to model road appearance in unbalanced scenarios is evaluated using the full combination of CityScapes and BDD100k datasets (note: the BDD100k dataset has approximately four times more datapoints than the Cityscapes dataset).

The results, summarized in Table 1 below, show the gain of performance with the proposed DSIS system, especially with respect to data utilization and to the ability to model diverse road appearances (i.e. to make few false positive detections).

Table 1

| | Training Data | LaFRAROFS | | Obstacle Track + | |
|---|---|---|---|---|---|
| | | AP ↑ | FRP$_{95}$ ↓ | AP ↑ | FRP$_{95}$ ↓ |
| Baseline | Cityscapes | 83,7 | 4,4 | 56,2 | 26,3 |
| DSIS:EM | Cityscapes | 88,1 (4,4) | 3,2 (1,2) | 48,4 (7,8) | 5,9 (20,4) |
| Baseline | S(Cityscapes,BDD100k) | 85,4 | 4,5 | 61,3 | 10,0 |
| DSIS:EM | S(Cityscapes,BDD100k) | 87,6 (2,2) | 3,3 (1,2) | 63,0 (1,7) | 3,9 (6,1) |
| Baseline | Cityscapes,BDD100k | 83,5 | 4,8 | 52,2 | 22,9 |
| DSIS:EM | Cityscapes,BDD100k | 91,2 (7,7) | 2,9 (1,9) | 78,5 (26,3) | 2,7(20,2) |

where S($\cdot$) indicates that the datasets had to be sub-sampled to the size of CityScapes in order to have roughly an equal number of images from each dataset, DSIS:EM corresponds to an embodiment of the DSIS system of course with the Embedding Module, but with neither the Distance-Based Scoring Module DSM nor the In-Painting Module IPM, and Baseline corresponds to the JSR-Net system proposed by Ref.[1].

Table 1 shows the gain in performance of the DSIS system according to the present disclosure compared to the baseline system, for different datasets varying in size and road appearance diversity.

As shown by Table 1, the system according to the present disclosure leads to improvements in all cases, being especially effective for complex data that required to model diverse road appearance; note the decrease in false positives.

The second experiment, whose results are given in Table 2 below, shows the contributions of the optional modules, that is, the InPainting Module and the Distance-Based scoring Module.

For this experiment, all the systems which have been compared were trained using the S(CityScapes,BDD100k) dataset. The following systems were compared: (1) the baseline, which as in Table 1 corresponds to the JSR-Net system (Ref.[1]); (2) the DSIS:EM system, already described for Table 1; (3) the DSIS:EM-DSM system, which is an embodiment of the DSIS system (of course with the Embedding Module), further including the Distance-Based Scoring Module DSM, but without the In-Painting Module IPM; and (4) the DSIS:EM-DSM-IPM system, which is an embodiment of the DSIS system which of course includes the Embedding Module, but further includes both the Distance-Based Scoring Module DSM and the In-Painting Module IPM.

Table 2 shows the results for this experiment and highlights the additive performance gains obtained thanks to the added DSM and IPN modules.

Table 2

| | LaFRAROFS | | Obstacle Track + | |
|---|---|---|---|---|
| | AP ↑ | FRP$_{95}$ ↓ | AP ↑ | FRP$_{95}$ ↓ |
| Baseline | 85,4 | 4,5 | 61,3 | 10,0 |
| DSIS:EM | 87,6 | 3,3 | 63 | 3,9 |
| DSIS:EM-DSM | 90,9 ($\pm$0,9) | 2,4 ($\pm$0,3) | 80,5 ($\pm$2,5) | 2,7 ($\pm$0,7) |
| DSIS:EM-DSM-IPM | 91,2 | 2,4 | 86,1 | 1,5 |

Besides, qualitative results were obtained which demonstrated the main strength and weakness of the proposed method, i.e. excellent performance on various surfaces with the ability to recognize false positives induced by road surface texture, but unsatisfactory performance for small distance objects.

As shown by the above results, the proposed method achieves state-of-art performance or better than state of the art performance while reducing the false positives significantly, and typically has the highest average precision for a wide range of operation points.

Although the present disclosure herein has been described with reference to particular embodiments, it is to be understood that these embodiments are merely illustrative of the principles and applications of the present disclosure.

In particular, although the methods and systems according to the present disclosure have been presented in the case of the control of a vehicle, the present disclosure can be applied to a broad variety of devices. It can be applied for instance to any kind of vehicle (ground, marine vehicle, aircraft, ..), to industrial machines or robots, etc.

It is intended that the specification and examples be considered as exemplary only, with a true scope of the disclosure being indicated by the following claims.

**Claims**

1. A computer-implemented surface identification method for identifying which pixels of a scene image (si) showing a scene are surface pixels which represent a surface shown in the scene image,
   the method comprising:

   S10) inputting the scene image (si);
   S22) encoding the scene image (si) into a segmentation latent features map (slfm) using a neural network-based segmentation encoder (SE);
   S24) inputting the segmentation latent features map (slfm) to a neural network-based segmentation decoder (SD) in order to predict a segmentation (sl,sm) which is a datum allowing pixels of the scene image to be classified into predetermined categories, the categories being such that surface pixels are classified in surface categorie(s) which represent(s) the surface and non-surface pixels are classified in non-surface categorie(s) which do(es) not represent the surface;
   S30) inputting the segmentation latent features map (slfm) to a neural network-based embedding module (EM) in order to calculate a segmentation embedding (se); the segmentation embedding (se) being a map of embedding vectors; the embedding module (EM) being configured so as to output the segmentation embedding (se) so that essentially all non-surface embedding vectors (nsev) be separated from a cluster (c) of the surface embedding vectors (sve) associated with the surface pixels;

S42) inputting the segmentation embedding (se) to a neural network-based reconstruction module (RM) in order to calculate a reconstructed scene image (rsi); a reconstruction error (err) being a per-pixel non-negative error between the scene image (si) and a reconstructed scene image (rsi) outputted by the reconstruction module (RM) based on the scene image (si), the reconstruction module (RM) being configured to minimize the reconstruction errors (err) accumulated over the surface pixels and to maximize the reconstruction errors (err) accumulated over the non-surface pixels;

S44) based on the scene image (si) and the reconstructed scene image (rsi), calculating a reconstruction error map ($r_{err}$) representing the reconstruction errors (err) between the reconstructed scene image (rsi) and the scene image (si);

S70) inputting the segmentation (sl,sm) and the reconstruction error map ($r_{err}$) to a neural network in order to calculate a surface pixels map (spm) in which the surface pixels of the scene image (ri) are identified or based on which the surface pixels can be identified;

S62) calculating an InPainted Image (ipi) by inpainting an error mask (erm) obtained by at least thresholding the reconstruction error map ($r_{err}$); and

calculating a difference map (pdm) representative of differences between the scene image (si) and the InPainted Image (ipi);

wherein at step S70, the calculation of surface pixels map (spm) using a neural network is further based on the difference map (pdm) that is input to such neural network.

2. A computer-implemented surface identification method according to claim 1, wherein the neural network-based embedding module (EM) is configured so that over segmentation embeddings (se) outputted for a set of scene images (si), essentially all non-surface embedding vectors (nsev) of segmentation embeddings (se) outputted based on the set of scene images are separated from a combined cluster (cc) including all the surface embedding vectors (sev) of surface embeddings outputted based on that set of scene images.

3. A computer-implemented surface identification method according to claim 1 or 2, wherein at step S42, the calculation of the reconstructed scene image (rsi) using a neural network-based reconstruction module (RM) is further based on the segmentation latent features map (slfm).

4. A computer-implemented surface identification method according to any one of claims 1 to 3, wherein the neural network-based embedding module (EM) comprises an upstream block (ASPP) configured to apply a spatial pooling function, in particular a spatial pyramid pooling function, to the segmentation latent features map (slfm).

5. A computer-implemented surface identification method according to any one of claims 1 to 4, wherein the neural network-based embedding module (EM) comprises a multi-layer perceptron (MLP), configured to calculate the segmentation embedding (se).

6. A computer-implemented surface identification method according to claim 5, calculating the difference map (pdm) comprises the steps of:

S64) passing respectively the InPainted Image (ipi) and the scene image (si) through a feature extraction network (FEN) configured to input the InPainted Image (ipi) and the scene image (si) and to output two perceptual representations obtained using perceptual loss based respectively on the scene image (si) and the InPainted Image (ipi); and

S66) calculating the difference map (pdm) based on said perceptual representations.

7. A computer-implemented surface identification method according to any one of claims 1 to 6, further comprising the steps of:

S52 - S54) based on a datum (sm,$r_{err}$) derived from the scene image (sm,$r_{err}$) or representative of the scene shown in the scene image (si), calculating a mean embedding vector (m_sm, m_$r_{err}$) as a mean of embedding vectors of the segmentation embedding (se) at locations identified in said datum as corresponding or probably corresponding to surface pixels; and

S56) calculating a feature channel (f_sm,f_$r_{err}$) as a channel in which each pixel (i,j) has a value based on a distance between said mean embedding vector (m_em, m_$r_{err}$) and the corresponding embedding vector ($e_{x,y}$) of the segmentation embedding (se); and

at step S70, the calculation of surface pixels map (spm) using a neural network is further based on the feature channel (f_sm,f_$r_{err}$) that is input to such neural network.

8. A computer-implemented surface identification method according to claim 7, wherein the datum is the segmentation (sl, sm) and the mean embedding vector (m_sm) is calculated as a mean of embedding vectors of the segmentation embedding (se) at locations identified in segmentation as corresponding to surface pixels.

9. A computer-implemented surface identification method according to claim 7, wherein the datum is the reconstruction error map ($r_{err}$) and the mean embedding vector (m_$r_{err}$) is calculated as a mean of embedding vectors of the segmentation embedding (se) at locations where the reconstruction error ($r_{err}$) is below a predetermined threshold.

10. A computer-implemented training method for training a surface identification system (DSIS) to perform a surface identification method according to any one of claims 1 to 9, wherein the training method comprises training the neural network-based embedding module (EM) using a loss function (L) and a training dataset, the training dataset comprising scene images (si); the loss function being configured, based on triplets of embedding vectors, each triplet comprising an anchor embedding vector ($e^a$), a surface embedding vector and a non-surface embedding vector, the anchor embedding vector being a surface embedding vector, to enforce a margin distance (m) between the anchor embedding vector ($e^a$) and non-surface embedding vectors ($e^n$), while minimizing distance to the surface embedding vector ($e^p$).

11. One or more computer program(s) comprising instructions which, when the instructions are executed by a computer, cause the computer to carry out the steps of a surface identification method according to any one of claims 1 to 9, or the steps of a training method according to claim 10.

12. A non-transitory computer readable medium, having the one or more computer program(s) according to claim 11 stored thereon.

13. A surface identification system (DSIS) for classifying pixels of a scene image (si) showing a surface (S) into surface pixels which represent the surface and non-surface pixels which do not represent the surface, wherein

the identification system (DSIS) comprises one or more processors (12) and a computer-readable medium (11); the computer-readable medium (11) comprises computer instructions stored therein, wherein the instructions, when executed by the one or more processors, cause the one or more processors to carry out the steps of a surface identification method according to any one of claims 1 to 9.

14. A control system for a machine such as a vehicle or a robot, comprising a surface identification system (DSIS) according to claim 13.

**Patentansprüche**

1. Computerimplementiertes Oberflächenidentifizierungsverfahren zum Identifizieren, welche Pixel eines Szenenbilds (si), das eine Szene zeigt, Oberflächenpixel sind, die eine in dem Szenenbild gezeigte Oberfläche darstellen, das Verfahren umfassend:

S10) Eingeben des Szenenbilds (si);
S22) Kodieren des Szenenbilds (si) in eine Karte latenter Segmentierungsmerkmale (slfm) unter Verwendung eines auf einem neuronalen Netz basierenden Segmentierungsencoders (SE);
S24) Eingeben der Karte latenter Segmentierungsmerkmale (slfm) in einen auf einem neuronalen Netz basierenden Segmentierungsdecoder (SD), um eine Segmentierung (sl,sm) vorherzusagen, was Daten sind, die es ermöglichen, Pixel des Szenenbilds in vorbestimmte Kategorien zu klassifizieren, wobei die Kategorien derart sind, dass Oberflächenpixel in Oberflächenkategorien klassifiziert werden, die die Oberfläche darstellen, und Nicht-Oberflächenpixel in Nicht-Oberflächenkategorien klassifiziert werden, die die Oberfläche nicht darstellen;
S30) Eingeben der Karte latenter Segmentierungsmerkmale (slfm) in ein auf einem neuronalen Netz basierendes Einbettungsmodul (EM), um eine Segmentierungseinbettung (se) zu berechnen; wobei die Segmentierungseinbettung (se) eine Karte von Einbettungsvektoren ist; wobei das Einbettungsmodul (EM) konfiguriert ist, um die Segmentierungseinbettung (se) auszugeben, sodass im Wesentlichen alle Nicht-Oberflächeneinbettungsvektoren (nsev) von einem Cluster (c) der Oberflächeneinbettungsvektoren (sve), die mit den Oberflächenpixeln assoziiert sind, getrennt werden;

S42) Eingeben der Segmentierungseinbettung (se) in ein auf einem neuronalen Netz basierendes Rekonstruktionsmodul (RM), um ein rekonstruiertes Szenenbild (rsi) zu berechnen; wobei ein Rekonstruktionsfehler (err) ein nicht-negativer Fehler pro Pixel zwischen dem Szenenbild (si) und einem rekonstruierten Szenenbild (rsi) ist, das von dem Rekonstruktionsmodul (RM) basierend auf dem Szenenbild (si) ausgegeben wird, wobei das Rekonstruktionsmodul (RM) konfiguriert ist, um die über die Oberflächenpixel akkumulierten Rekonstruktionsfehler (err) zu minimieren und die über die Nicht-Oberflächenpixel akkumulierten Rekonstruktionsfehler (err) zu maximieren;

S44) basierend auf dem Szenenbild (si) und dem rekonstruierten Szenenbild (rsi), Berechnen einer Rekonstruktionsfehlerkarte ($r_{err}$), die die Rekonstruktionsfehler (err) zwischen dem rekonstruierten Szenenbild (rsi) und dem Szenenbild (si) darstellt;

S70) Eingeben der Segmentierung (sl,sm) und der Rekonstruktionsfehlerkarte ($r_{err}$) in ein neuronales Netz, um eine Oberflächenpixelkarte (spm) zu berechnen, in der die Oberflächenpixel des Szenenbilds (ri) identifiziert werden oder anhand derer die Oberflächenpixel identifiziert werden können;

S62) Berechnen eines Inpainted-Bilds (ipi) durch Inpainting einer Fehlermaske (erm), die zumindest durch Schwellenwertbildung der Rekonstruktionsfehlerkarte ($r_{err}$) erlangt wird; und

Berechnen einer Differenzkarte (pdm), die repräsentativ für Unterschiede zwischen dem Szenenbild (si) und dem Inpainted-Bild (ipi) ist;

wobei in Schritt S70 die Berechnung von Oberflächenpixelkarte (spm) unter Verwendung eines neuronalen Netzes ferner auf der Differenzkarte (pdm) basiert, die in ein solches neuronales Netz eingegeben wird.

2. Computerimplementiertes Oberflächenidentifizierungsverfahren nach Anspruch 1, wobei das auf einem neuronalen Netz basierende Einbettungsmodul (EM) konfiguriert ist, um über Segmentierungseinbettungen (se), die für einen Satz von Szenenbildern (si) ausgegeben werden, im Wesentlichen alle Nicht-Oberflächeneinbettungsvektoren (nsev) von Segmentierungseinbettungen (se), die basierend auf dem Satz von Szenenbildern ausgegeben werden, von einem kombinierten Cluster (cc) zu trennen, der alle Oberflächeneinbettungsvektoren (sev) von Oberflächeneinbettungen beinhaltet, die basierend auf diesem Satz von Szenenbildern ausgegeben werden.

3. Computerimplementiertes Oberflächenidentifizierungsverfahren nach Anspruch 1 oder 2, wobei in Schritt S42 die Berechnung des rekonstruierten Szenenbilds (rsi) unter Verwendung eines auf einem neuronalen Netz basierenden Rekonstruktionsmodul (RM) ferner auf der Karte latenter Segmentierungsmerkmale (slfm) basiert.

4. Computerimplementiertes Oberflächenidentifizierungsverfahren nach einem der Ansprüche 1 bis 3, wobei das auf einem neuronalen Netz basierende Einbettungsmodul (EM) einen stromaufwärtigen Block (ASPP) umfasst, der konfiguriert ist, um eine räumliche Pooling-Funktion, insbesondere eine räumliche Pyramiden-Pooling-Funktion, auf die Karte latenter Segmentierungsmerkmale (slfm) anzuwenden.

5. Computerimplementiertes Oberflächenidentifizierungsverfahren nach einem der Ansprüche 1 bis 4, wobei das auf einem neuronalen Netz basierende Einbettungsmodul (EM) ein mehrschichtiges Perzeptron (MLP) umfasst, das konfiguriert ist, um die Segmentierungseinbettung (se) zu berechnen.

6. Computerimplementiertes Oberflächenidentifizierungsverfahren nach Anspruch 5, wobei ein Berechnen der Differenzkarte (pdm) die folgenden Schritte umfasst:

S64) Durchleiten jeweils des Inpainted-Bilds (ipi) und des Szenenbilds (si) durch ein Merkmalsextraktionsnetz (FEN), das konfiguriert ist, um das Inpainted-Bild (ipi) und das Szenenbild (si) einzugeben und zwei Wahrnehmungsdarstellungen auszugeben, die unter Verwendung von Wahrnehmungsverlusten jeweils basierend auf dem Szenenbild (si) und dem Inpainted-Bild (ipi) erlangt werden; und

S66) Berechnen der Differenzkarte (pdm) basierend auf den Wahrnehmungsdarstellungen.

7. Computerimplementiertes Oberflächenidentifizierungsverfahren nach einem der Ansprüche 1 bis 6, ferner umfassend die folgenden Schritte:

S52 - S54) basierend auf Daten (sm,$r_{err}$), die aus dem Szenenbild (sm,$r_{err}$) abgeleitet werden oder repräsentativ für die in dem Szenenbild (si) dargestellte Szene sind, Berechnen eines mittleren Einbettungsvektors (m_sm,m_$r_{err}$) als Mittelwert von Einbettungsvektoren der Segmentierungseinbettung (se) an Stellen, die in den Daten als Oberflächenpixel entsprechend oder wahrscheinlich entsprechend identifiziert werden; und

S56) Berechnen eines Merkmalskanals (f_sm,f_$r_{err}$) als ein Kanal, in dem jedes Pixel (i,j) einen Wert aufweist, der auf einem Abstand zwischen dem mittleren Einbettungsvektor (m_em,m_r$_{err}$) und dem entsprechenden Einbettungsvektor (e$_{x,y}$) der Segmentierungseinbettung (se) basiert; und

wobei in Schritt S70 die Berechnung von Oberflächen pixel karte (spm) unter Verwendung eines neuronalen Netzes ferner auf dem Merkmalskanal (f_sm,f_r$_{err}$) basiert, der in ein solches neuronales Netz eingegeben wird.

8. Computerimplementiertes Oberflächenidentifizierungsverfahren nach Anspruch 7, wobei die Daten die Segmentierung (sl,sm) sind und der mittlere Einbettungsvektor (m_sm) als Mittelwert von Einbettungsvektoren der Segmentierungseinbettung (se) an Stellen berechnet wird, die bei der Segmentierung entsprechend als Oberflächenpixel identifiziert werden.

9. Computerimplementiertes Oberflächenidentifizierungsverfahren nach Anspruch 7, wobei der Bezugspunkt die Rekonstruktionsfehlerkarte (r$_{err}$) ist und der mittlere Einbettungsvektor (m_r$_{err}$) als Mittelwert von Einbettungsvektoren der Segmentierungseinbettung (se) an Stellen berechnet wird, an denen der Rekonstruktionsfehler (r$_{err}$) unter einem vorgegebenen Schwellenwert ist.

10. Computerimplementiertes Trainingsverfahren zum Trainieren eines Oberflächenidentifizierungssystems (DSIS) zum Durchführen eines Oberflächenidentifizierungsverfahrens nach einem der Ansprüche 1 bis 9, wobei das Trainingsverfahren ein Trainieren des auf einem neuronalen Netz basierenden Einbettungsmoduls (EM) unter Verwendung einer Verlustfunktion (L) und eines Trainingsdatensatzes umfasst, wobei der Trainingsdatensatz Szenenbilder (si) umfasst; die Verlustfunktion basierend auf Tripletts von Einbettungsvektoren konfiguriert wird, wobei jedes Triplett einen Ankereinbettungsvektor (e$^a$), einen Oberflächeneinbettungsvektor und einen Nicht-Oberflächeneinbettungsvektor umfasst, wobei der Ankereinbettungsvektor ein Oberflächeneinbettungsvektor ist, um einen Randabstand (m) zwischen dem Ankereinbettungsvektor (e$^a$) und Nicht-Oberflächeneinbettungsvektoren (e$^n$) durchzusetzen, während ein Abstand zu dem Oberflächeneinbettungsvektor (e$^P$) minimiert wird.

11. Ein oder mehrere Computerprogramm(e), umfassend Anweisungen, die, wenn die Anweisungen von einem Computer ausgeführt werden, den Computer veranlassen, die Schritte eines Oberflächenidentifizierungsverfahrens nach einem der Ansprüche 1 bis 9 oder die Schritte eines Trainingsverfahrens nach Anspruch 10 durchzuführen.

12. Nicht-transitorisches rechnerlesbares Medium, auf dem das eine oder die mehreren Rechnerprogramme nach Anspruch 11 gespeichert sind.

13. Oberflächenidentifizierungssystem (DSIS) zum Klassifizieren von Pixeln eines Szenenbilds (si), das eine Oberfläche (S) zeigt, in Oberflächenpixel, die die Oberfläche darstellen, und Nicht-Oberflächenpixel, die die Oberfläche nicht darstellen, wobei

das Identifikationssystem (DSIS) einen oder mehrere Prozessoren (12) und ein computerlesbares Medium (11) umfasst;
das computerlesbare Medium (11) darauf gespeicherte Computeranweisungen umfasst, wobei die Anweisungen, wenn sie von dem einen oder den mehreren Prozessoren ausgeführt werden, den einen oder die mehreren Prozessoren veranlassen, die Schritte eines Oberflächenidentifizierungsverfahrens nach einem der Ansprüche 1 bis 9 durchzuführen.

14. Steuersystem für eine Maschine, wie beispielsweise ein Fahrzeug oder einen Roboter, umfassend ein Oberflächenidentifizierungssystem (DSIS) nach Anspruch 13.

**Revendications**

1. Procédé d'identification de surface mis en œuvre par ordinateur pour identifier quels éléments d'image d'une image de scène (si) montrant une scène sont des éléments d'image de surface qui représentent une surface montrée dans l'image de scène,
le procédé comprenant :

S10) l'entrée de l'image de scène (si) ;
S22) l'encodage de l'image de scène (si) dans une carte de caractéristiques latentes de segmentation (slfm) en utilisant un encodeur de segmentation basé sur un réseau neuronal (SE) ;
S24) l'entrée la carte de caractéristiques latentes de segmentation (slfm) dans un décodeur de segmentation basé sur un réseau neuronal (SD) afin de prédire une segmentation (sl,sm) qui est une donnée permettant à des éléments d'image de l'image de scène d'être classés dans des catégories prédéterminées, les catégories étant telles que des éléments d'image de surface sont classés dans une ou des catégories de surface qui représentent la surface et des éléments d'image pas de surface sont classés dans une ou des catégories pas de surface qui ne représentent pas la surface ;

S30) l'entrée de la carte de caractéristiques latentes de segmentation (slfm) dans un module d'intégration basé sur un réseau neuronal (EM) afin de calculer une intégration de segmentation (se) ; l'intégration de segmentation (se) étant une carte de vecteurs d'intégration ; le module d'intégration (EM) étant configuré de façon à délivrer l'intégration de segmentation (se) de telle sorte qu'essentiellement tous les vecteurs d'intégration pas de surface (nsev) sont séparés d'un groupe (c) des vecteurs d'intégration de surface (sve) associés aux éléments d'image de surface ;

S42) l'entrée de l'intégration de segmentation (se) dans un module de reconstruction basé sur un réseau neuronal (RM) afin de calculer une image de scène reconstruite (rsi) ; une erreur de reconstruction (err) étant une erreur non négative par élément d'image entre l'image de scène (si) et une image de scène reconstruite (rsi) délivrée par le module de reconstruction (RM) sur la base de l'image de scène (si), le module de reconstruction (RM) étant configuré pour minimiser les erreurs de reconstruction (err) accumulées sur les éléments d'image de surface et pour maximiser les erreurs de reconstruction (err) accumulées sur les éléments d'image pas de surface ;

S44) sur la base de l'image de scène (si) et de l'image de scène reconstruite (rsi), le calcul d'une carte d'erreur de reconstruction ($r_{err}$) représentant les erreurs de reconstruction (err) entre l'image de scène reconstruite (rsi) et l'image de scène (si) ;

S70) l'entrée de la segmentation (sl,sm) et de la carte d'erreur de reconstruction (rerr) dans un réseau neuronal afin de calculer une carte d'éléments d'image de surface (spm) dans laquelle les éléments d'image de surface de l'image de scène (ri) sont identifiés ou sur la base desquels des éléments d'image de surface peuvent être identifiés ;

S62) le calcul d'une image retouchée (ipi) par retouche d'un masque d'erreur (MTC) obtenu par au moins un traitement de seuil de la carte d'erreur de reconstruction (rerr) ; et

le calcul d'une carte de différence (pdm) représentative de différences entre l'image de scène (si) et l'image retouchée (ipi) ;

procédé selon lequel, à l'étape S70, le calcul de la carte d'éléments d'image de surface (spm) utilisant un réseau neuronal est en outre basé sur la carte de différence (pdm) qui est entrée dans ce réseau neuronal.

2. Procédé d'identification de surface mis en œuvre par ordinateur selon la revendication 1, selon lequel le module d'intégration basé sur un réseau neuronal (EM) est configuré de telle sorte que sur des intégrations de segmentation (Se) délivrées pour un ensemble d'images de scène (si), essentiellement tous les vecteurs d'intégration pas de surface (nsev) des intégrations de segmentation (Se) délivrées sur la base de l'ensemble d'images de scène sont séparés d'un groupe combiné (cc) comprenant tous les vecteurs d'intégration de surface (sev) des intégrations de surface délivrées sur la base de cet ensemble d'images de scène.

3. Procédé d'identification de surface mis en œuvre par ordinateur selon la revendication 1 ou 2, selon lequel, à l'étape S42, le calcul de l'image de scène reconstruite (rsi) en utilisant un module de reconstruction basé sur un réseau neuronal (RM) est en outre basé sur la carte de caractéristiques latentes de segmentation (slfm).

4. Procédé d'identification de surface mis en œuvre par ordinateur selon l'une quelconque des revendications 1 à 3, selon lequel le module d'intégration basé sur un réseau neuronal (EM) comprend un bloc amont (ASPP) configuré pour appliquer une fonction de regroupement spatial, en particulier une fonction de regroupement pyramidal spatial, sur la carte de caractéristiques latentes de segmentation (slfm).

5. Procédé d'identification de surface mis en œuvre par ordinateur selon l'une quelconque des revendications 1 à 4, selon lequel le module d'intégration basé sur un réseau neuronal (EM) comprend un perceptron multicouche (MLP), configuré pour calculer l'intégration de segmentation (se).

6. Procédé d'identification de surface mis en œuvre par ordinateur selon la revendication 5, le calcul de la carte de différence (pdm) comprenant les étapes de :

S64) passage respectivement de l'image retouchée (ipi) et de l'image de scène (si) par un réseau d'extraction de caractéristique (FEN) configuré pour entrer l'image retouchée (ipi) et l'image de scène (si) et pour délivrer deux représentations perceptuelles obtenues en utilisant une perte perceptuelle basée respectivement sur l'image de scène (si) et l'image retouchée (ipi) ; et
S66) calcul de la carte de différence (pdm) sur la base desdites représentations perceptuelles.

7. Procédé d'identification de surface mis en œuvre par ordinateur selon l'une quelconque des revendications 1 à 6, comprenant en outre les étapes de :

S52 à S54) sur la base d'une donnée ($sm,r_{err}$) dérivée de l'image de scène ($sm,r_{err}$) ou représentative de la scène montrée dans l'image de scène (si), calcul d'un vecteur d'intégration moyen ($m\_sm$, $m\_r_{err}$) comme une moyenne de vecteurs d'intégration de l'intégration de segmentation (se) dans des emplacements identifiés dans ladite donnée comme correspondant ou correspondant probablement aux éléments d'image de surface ; et
S56) calcul d'un canal de caractéristique ($f\_sm,f\_r_{err}$) comme canal dans lequel chaque élément d'image (i,j) a une valeur basée sur une distance entre ledit vecteur d'intégration moyen ($m\_em$, $m\_r_{err}$) et le vecteur d'intégration correspondant ($e_{x,y}$) de l'intégration de segmentation (se) ; et
à l'étape S70, le calcul de la carte d'éléments d'image de surface (spm) en utilisant un réseau neuronal est en outre basé sur le canal de caractéristique ($f\_sm,f\_r_{err}$) qui est entré dans ce réseau neuronal.

8. Procédé d'identification de surface mis en œuvre par ordinateur selon la revendication 7, selon lequel la donnée est la segmentation (sl, sm) et le vecteur d'intégration moyen ($m\_sm$) est calculé comme une moyenne de vecteurs d'intégration de l'intégration de segmentation (se) dans des emplacements identifiés dans la segmentation comme correspondant à des éléments d'image de surface.

9. Procédé d'identification de surface mis en œuvre par ordinateur selon la revendication 7, selon lequel la donnée est la carte d'erreur de reconstruction ($r_{err}$) et le vecteur d'intégration moyen ($m\_r_{err}$) est calculé comme une moyenne de vecteurs d'intégration de l'intégration de segmentation (se) dans des emplacements où l'erreur de reconstruction ($r_{err}$) est en dessous d'un seuil prédéterminé.

10. Procédé d'entraînement mis en œuvre par ordinateur pour entraîner un système d'identification de surface (DSIS) à réaliser un procédé d'identification de surface selon l'une quelconque des revendications 1 à 9, selon lequel le procédé d'entraînement comprend un entraînement du module d'intégration basé sur un réseau neuronal (EM) en utilisant une fonction de perte (L) et un ensemble de données d'entraînement, l'ensemble de données d'entraînement comprenant des images de scène (si) ; la fonction de perte étant configurée, sur la base de triplettes de vecteurs d'intégration, chaque triplette comprenant un vecteur d'intégration d'ancrage ($e^a$), un vecteur d'intégration de surface et un vecteur d'intégration pas de surface, le vecteur d'intégration d'ancrage étant un vecteur d'intégration de surface, pour imposer une distance de marge (m) entre le vecteur d'intégration d'ancrage ($e^a$) et des vecteurs d'intégration pas de surface ($e^n$), tout en minimisant une distance jusqu'au vecteur d'intégration de surface ($e^p$).

11. Un ou plusieurs programmes informatiques comprenant des instructions qui, quand les instructions sont exécutées par un ordinateur, amènent l'ordinateur à mettre en œuvre les étapes d'un procédé d'identification de surface selon l'une quelconque des revendications 1 à 9, ou les étapes d'un procédé d'entraînement selon la revendication 10.

12. Milieu lisible par un ordinateur non-transitoire, ayant les un ou plusieurs programmes informatiques selon la revendication 11 stockés dessus.

13. Système d'identification de surface (DSIS) destiné à classer des éléments d'image d'une image de scène (si) montrant une surface (s) en éléments d'image de surface qui représentent la surface et en éléments d'image pas de surface qui ne représentent pas la surface,

le système d'identification (DSIS) comprenant un ou plusieurs processeurs (12) et un milieu lisible par ordinateur (11) ;
le milieu lisible par un ordinateur (11) comprenant des instructions d'ordinateur stockées dessus, les instructions, lorsqu'elles sont exécutées par les un ou plusieurs processeurs, amenant les un ou plusieurs processeurs à mettre en œuvre les étapes d'un procédé d'identification de surface selon l'une quelconque des revendications 1 à 9.

14. Système de commande pour une machine telle qu'un véhicule ou un robot, comprenant un système d'identification de surface (DSIS) selon la revendication 13.

**FIG.1**

**FIG.2**

**FIG.3**

**FIG.4**

S10) Input the surface image si

S20)
- S22) Encode the surface image si into a segmentation slf
- S24) Predict segmentation logits si and segmention map sm

S30) Calculate segmentation embedding se

S40)
- S42) Calculate a reconstructed surface image rsi based on the segmentation embedding se
- S44) Calculate reconstruction error map $r_{err}$

S50)
- S52) Calculate segmentation masks m_sm and m_$r_{err}$
- S54) Calculate mean embeddings m_sm and m_$r_{err}$
- S56) Calculate features channels f_sm and f_$r_{err}$

S60)
- S62) Calculate InPainted Image ipi
- S64) Calculate transformed images based on si, ipi
- S66) Calculate difference map pdm

S70) Calculate surface pixels map (spm)

FIG.5

FIG.6

FIG.7

FIG.8

FIG.9

FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TOMAS VOJIR** ; **TOMAS SIPKA** ; **RAHAF ALJUNDI** ; **NIKOLAY CHUMERIN** ; **DANIEL OLMEDA REINO** ; **JIRI MATAS**. Road Anomaly Detection by Partial Image Reconstruction With Segmentation Coupling. *Int. Conf. Comput. Vis.*, October 2021
- **L. CHEN** ; **G. PAPANDREOU** ; **I. KOKKINOS** ; **K. MURPHY** ; **A. L.YUILLE**. DeepLab: Semantic Image Segmentation with Deep Convolutional Nets, Atrous Convolution, and Fully Connected CRFs. *IEEE Trans. Pattern Anal. Mach. Intell.*, 2018, vol. 40 (4), 834-848
- **M. CORDTS** ; **M. OMRAN** ; **S. RAMOS** ; **T. REHFELD** ; **M. ENZWEILER** ; **R. BENENSON** ; **U. FRANKE** ; **S. ROTH** ; **B. SCHIELE**. The Cityscapes Dataset for Semantic Urban Scene Understanding. *IEEE Conf. Comput. Vis. Pattern Recog.*, 2016
- **Z. WANG** ; **E. P. SIMONCELLI** ; **A. C. BOVIK**. Multiscale structural similarity for image quality assessment. *The Thirty-Seventh Asilomar Conference on Signals, Systems Computers*, 2003, vol. 2
- **FLORIAN SCHROFF** ; **DMITRY KALENICHENKO** ; **JAMES PHILBIN**. FaceNet: A Unified Embedding for Face Recognition and Clustering. *IEEE Conf. Comput. Vis. Pattern Recog.*, June 2015
- **KAREN SIMONYAN** ; **ANDREW ZISSERMAN**. Very Deep Convolutional Networks for Large-Scale Image Recognition. *International Conference on Learning Representations*, 2015
- **JIAHUI YU** ; **ZHE LIN** ; **JIMEI YANG** ; **XIAOHUI SHEN** ; **XIN LU** ; **THOMAS S. HUANG**. Free-Form Image Inpainting With Gated Convolution. *Int. Conf. Comput. Vis.*, October 2019
- **JUSTIN JOHNSON** ; **ALEXANDRE ALAHI** ; **LI FEI-FEI**. Perceptual Losses for Real-Time Style Transfer and Super-Resolution. *Eur. Conf. Comput. Vis.*, 2016, 694-711
- **ALEXEY DOSOVITSKIY** ; **THOMAS BROX**. Generating Images with Perceptual Similarity Metrics Based on Deep Networks. *Adv. Neural Inform. Process. Syst.*, 2016, 658-666
- **ELAD LEVI** ; **TETE XIAO** ; **XIAOLONG WANG** ; **TREVOR DARRELL**. Rethinking Preventing Class-Collapsing in Metric Learning With Margin-Based Losses. *Int. Conf. Comput. Vis.*, October 2021, 10316-10325
- **P. PINGGERA** ; **S. RAMOS** ; **S. GEHRIG** ; **U. FRANKE** ; **C. ROTHER** ; **R. MESTER**. Lost and Found: detecting small road hazards for self-driving vehicles. *International Conference on Intelligent Robots and Systems (IROS)*, 2016
- **KRZYSZTOF LIS** ; **KRISHNA NAKKA** ; **PASCAL FUA** ; **MATHIEU SALZMANN**. Detecting the Unexpected via Image Resynthesis. *Int. Conf. Comput. Vis.*, October 2019
- **ROBIN CHAN** ; **KRZYSZTOF LIS** ; **SVENJA UHLEMEYER** ; **HERMANN BLUM** ; **SINA HONARI** ; **ROLAND SIEGWART** ; **PASCAL FUA** ; **MATHIEU SALZMANN** ; **MATTHIAS ROTTMANN**. *SegmentMeIfYouCan: A Benchmark for Anomaly Segmentation*, 2021
- **KRZYSZTOF LIS** ; **SINA HONARI** ; **PASCAL FUA** ; **MATHIEU SALZMANN**. *Detecting Road Obstacles by Erasing Them*, 2021
- **HERMANN BLUM** ; **PAUL-EDOUARD SARLIN** ; **JUAN NIETO** ; **ROLAND SIEGWART** ; **CESAR CADENA**. Fishyscapes: A Benchmark for Safe Semantic Segmentation in Autonomous Driving. *2019 IEEE/CVF International Conference on Computer Vision Workshop (ICCVW)*, 2019, 2403-2412
- **FISHER YU** ; **HAOFENG CHEN** ; **XIN WANG** ; **WENQI XIAN** ; **YINGYING CHEN** ; **FANGCHEN LIU** ; **VASHISHT MADHAVAN** ; **TREVOR DARRELL**. BDD100K: A Diverse Driving Dataset for Heterogeneous Multitask Learning. *IEEE Conf. Comput. Vis. Pattern Recog.*, June 2020